(19) Europäisches Patentamt / European Patent Office / Office européen des brevets

(11) **EP 3 928 980 A1**

(12) **EUROPEAN PATENT APPLICATION**
published in accordance with Art. 153(4) EPC

(43) Date of publication:
**29.12.2021 Bulletin 2021/52**

(21) Application number: **20760160.0**

(22) Date of filing: **19.02.2020**

(51) Int Cl.:
*B32B 27/34* *(2006.01)*     *B05D 7/04* *(2006.01)*
*B05D 7/24* *(2006.01)*     *B29C 55/02* *(2006.01)*
*B29C 55/04* *(2006.01)*     *B29C 55/12* *(2006.01)*
*C08J 7/04* *(2020.01)*     *G02B 1/11* *(2015.01)*
*G02B 1/14* *(2015.01)*

(86) International application number:
**PCT/JP2020/006485**

(87) International publication number:
**WO 2020/171115 (27.08.2020 Gazette 2020/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.02.2019 JP 2019028958
26.02.2019 JP 2019032210
19.09.2019 JP 2019169929**

(71) Applicant: **Unitika Ltd.
Amagasaki-shi, Hyogo 660-0824 (JP)**

(72) Inventors:
• **OKABE Takashi**
**Uji-shi, Kyoto 611-0021 (JP)**
• **OKUMURA Nobuyasu**
**Uji-shi, Kyoto 611-0021 (JP)**
• **YAMAMOTO Masafumi**
**Uji-shi, Kyoto 611-0021 (JP)**
• **ASHIHARA Kumi**
**Uji-shi, Kyoto 611-0021 (JP)**
• **SHIMOMURA Midori**
**Uji-shi, Kyoto 611-0021 (JP)**
• **UENO Yoshimi**
**Uji-shi, Kyoto 611-0021 (JP)**

(74) Representative: **Vigand, Philippe et al
Novagraaf International SA
Chemin de l'Echo 3
1213 Onex - Genève (CH)**

(54) **LAMINATED FILM AND METHOD FOR MANUFACTURING SAME**

(57) A laminated film having a resin layer laminated on at least one surface of a base film. The laminated film is characterized by: the base film being a semi-aromatic polyamide film that has been at least uniaxially stretched; the resin layer having a thickness of 0.03 to 0.5 $\mu$m; and the close adhesion between the base film and the resin layer, according to the cross-cut method described in JIS K 5600, being 95% or more.

EP 3 928 980 A1

**Description**

Technical Field

The present invention relates to a laminated film having a resin layer laminated on at least one surface of a base film.

Background Art

On the display substrate films used for liquid crystal displays, organic electroluminescent displays, and the like, functional layers are laminated in order to provide various functions. Examples of the functional layers include antistatic layers to provide an antistatic function, antireflection layers to suppress reflection, and hard coat layers to improve surface hardness. In particular, the hard coat layers have become essential for display applications, and are not only used as a single layer, but also as an underlying layer for antireflection layers. Therefore, formation of the hard coat layers has become an important technology.

The organic electroluminescent (OLED) displays mentioned above are suited for thin display devices as a display material, and can be used as very vivid screen displays using organic materials that emit light on their own without the use of backlights, thus expanding their applications in various fields. Examples of their applications include display devices for large televisions, display devices for car navigation systems, and display devices for mobile devices such as cell phones and smart phones. Among these, in mobile devices such as smart phones, OLEDs are expected to be used as a rollable or foldable display material in the future. Since the display devices of such mobile devices are equipped with touch panels and the like, anti-scratch processing on the display devices is considered to be an essential requirement.

In display substrate films that have hard coat layers laminated on the surface thereof for preventing scratches, the hard coat layers are required to be more firmly adhered and laminated when applied to rollable or foldable display materials. In addition, display substrates are subjected to repeated thermal history in many production steps, and are also incorporated into a variety of mobile devices as displays and made into products. Furthermore, display substrates are required to have durability in terms of quality so that they can be used stably over a long period of time without damage or deterioration of the members, even when they are in use, against the heat generated by the displays or products themselves and the change in temperature of the environment.

As a method for forming a hard coat layer made of an acrylic resin on one surface of a base film made of a thermoplastic resin or the like, Patent Literatures 1 and 2 disclose that a coating is directly formed on a base film with an application liquid for acrylic resin layer formation and is cured with ultraviolet light as necessary, thereby obtaining a hard coat layer.

Citation List

Patent Literature

   Patent Literature 1: Japanese Patent Laid-Open No. 2006-190189
   Patent Literature 2: Japanese Patent Laid-Open No. 2015-45718

Summary of Invention

Technical Problem

However, in the laminated bodies obtained in Patent Literatures 1 and 2, the adhesiveness between the base film and the hard coat layer is not sufficient.

An object of the present invention is to improve the adhesiveness between a base film and a hard coat layer, and to provide a laminated film in which a resin layer on which a hard coat layer can be laminated with excellent adhesiveness is laminated on a base film.

Solution to Problem

As a result of investigations to solve the problem described above, the present inventors have found that a laminated film in which a semi-aromatic polyamide film that has been at least uniaxially stretched is used as a base film, and a resin layer having a specific thickness is laminated on at least one surface of this film, has excellent close adhesion between the base film and the resin layer, and can solve the problem described above, thereby achieving the present invention.

A laminated film of the present invention, having a resin layer laminated on at least one surface of a base film, is characterized by that:

the base film is a semi-aromatic polyamide film that has been at least uniaxially stretched;
the resin layer has a thickness of 0.03 to 0.5 μm; and
the close adhesion between the base film and the resin layer, according to the cross-cut method described in JIS K 5600, is 95% or more.

According to the laminated film of the present invention, it is preferable that the resin constituting the resin layer contain one selected from the group consisting of a polyamide-based resin, a polyester-based resin, and a polyurethane-based resin.

According to the laminated film of the present invention, it is preferable that the polyamide-based resin be a dimer acid-based polyamide resin.

According to the laminated film of the present invention, it is preferable that the polyurethane-based resin be a polyester-based urethane resin.

According to the laminated film of the present invention, it is preferable that the resin layer contain inorganic and/or organic fine particles.

According to the laminated film of the present invention, it is preferable that the resin layer have the fine particles at a content of 0.1 to 25% by mass.

According to the laminated film of the present invention, it is preferable that the semi-aromatic polyamide contain an aromatic dicarboxylic acid component and an aliphatic diamine component.

It is preferable that the laminated film of the present invention have a haze of 3% or less.

It is preferable that the laminated film of the present invention have a dynamic friction coefficient of 0.7 or less under an atmosphere of 23°C × 50% RH on the surface of the resin layer.

It is preferable that the laminated film of the present invention have a thermal shrinkage factor of 3% or less after a treatment at 250°C for 5 minutes.

A laminated body of the present invention has an acrylic resin-containing layer laminated on the resin layer of the laminated film described above.

An optical component of the present invention uses the laminated body described above.

A method for producing a laminated film of the present invention is a method for producing the laminated film described above, characterized by that a coating agent for resin layer formation is applied to at least one surface of a semi-aromatic polyamide film to form a resin layer.

It is suitable that the method for producing a laminated film of the present invention include the following steps (a) to (f):

(a) producing an unstretched film made of semi-aromatic polyamide;
(b) applying a coating agent for resin layer formation to at least one surface of the film made of semi-aromatic polyamide to form a coating film;
(c) drying the coating film;
(d) stretching the film;
(e) subjecting the stretched film to a heat setting treatment at 250°C to (Tm - 5°C); and
(f) rolling the stretched film up.

According to the method for producing a laminated film of the present invention, it is suitable that the steps be performed in an order of (a), (b), (c), (d), (e), and (f).

According to the method for producing a laminated film of the present invention, it is suitable that the steps be performed in an order of (a), (d), (b), (c), (d), (e), and (f).

According to the method for producing a laminated film of the present invention, it is suitable that the steps be performed in an order of (a), (d), (e), (b), (c), and (f).

Advantageous Effects of Invention

According to the present invention, it is possible to provide a heat-resistant film with excellent adhesiveness with a hard coat layer, excellent flex resistance so that no white fold marks remain after repeated foldings, high transparency, and good slipperiness.

Description of Embodiments

Hereinafter, the present invention will be described in detail.

In the laminated film of the present invention, a resin layer is provided on at least one surface of a semi-aromatic polyamide film. The semi-aromatic polyamide film has been at least uniaxially stretched, and includes one that has been biaxially stretched.

<Semi-Aromatic Polyamide Film>

The base material constituting the laminated film of the present invention is a semi-aromatic polyamide film. As the semi-aromatic polyamide constituting this film, one that contains an aromatic dicarboxylic acid component and an aliphatic diamine component or one that contains an aliphatic dicarboxylic acid component and an aromatic diamine component can be used. Examples of semi-aromatic polyamides containing an aromatic dicarboxylic acid component and an aliphatic diamine component include polyamide 9T, which is made of terephthalic acid and 1,9-nonanediamine, and polyamide 10T, which is made of terephthalic acid and 1,10-decanediamine. Examples of semi-aromatic polyamides containing an aliphatic dicarboxylic acid component and an aromatic diamine component include polyamide MXD6, which is made of adipic acid and meta-xylylenediamine. Among them, for reasons of excellent balance between transparency and dimensional stability, as the semi-aromatic polyamide used in the present invention, one that contains an aromatic dicarboxylic acid component and an aliphatic diamine component is preferable. Hereinafter, the semi-aromatic polyamide containing an aromatic dicarboxylic acid component and an aliphatic diamine component will be described in detail.

The aromatic dicarboxylic acid component preferably contains terephthalic acid at 60 mol% or more, more preferably contains terephthalic acid at 70 mol% or more, and even more preferably contains terephthalic acid at 85 mol% or more. When the content of terephthalic acid is less than 60 mol%, the resulting film has lower heat resistance and low water absorbency of the resulting film is reduced.

Examples of aromatic dicarboxylic acid components other than terephthalic acid include isophthalic acid and naphthalenedicarboxylic acid (1,2-form, 1,3-form, 1,4-form, 1,5-form, 1,6-form, 1,7-form, 1,8-form, 2,3-form, 2,6-form, and 2,7-form).

The semi-aromatic polyamide may contain dicarboxylic acid components other than the aromatic dicarboxylic acid component as the dicarboxylic acid component, to the extent that the effects of the present invention are not impaired. Examples of other dicarboxylic acids include aliphatic dicarboxylic acids such as oxalic acid, malonic acid, succinic acid, glutaric acid, adipic acid, sebacic acid, dodecanedioic acid, tetradecanedioic acid, and octadecanedioic acid.

The aliphatic diamine component preferably contains aliphatic diamines having 6 to 12 carbon atoms as its main component, more preferably contains aliphatic diamines having 9 to 12 carbon atoms as its main component, and even more preferably contains an aliphatic diamine having 9 or 10 carbon atoms as its main component.

The content of aliphatic diamines having 6 to 12 carbon atoms in the aliphatic diamine component is preferably 60 mol% or more, more preferably 75 mol% or more, and even more preferably 90 mol% or more. When the content of aliphatic diamines having 6 to 12 carbon atoms is 60 mol% or more, the resulting film can achieve both heat resistance and productivity. Aliphatic diamines having 6 to 12 carbon atoms may be used singly, or may be used in combinations of two or more thereof. When used in combinations of two or more thereof, the content shall be the total of them.

Examples of aliphatic diamines having 6 to 12 carbon atoms include linear aliphatic diamines such as 1,6-hexanediamine, 1,7-heptanediamine, 1,8-octanediamine, 1,9-nonanediamine, 1,10-decanediamine, 1,11-undecanediamine, and 1,12-dodecanediamine; and branched aliphatic diamines such as 2-methyl-1,8-octanediamine, 4-methyl-1,8-octanediamine, 5-methyl-1,9-nonanediamine, 2,2,4-/2,4,4-trimethyl-1,6-hexanediamine, 2-methyl-1,5-pentanediamine, 2-methyl-1,6-hexanediamine, 2-methyl-1,7-heptanediamine.

Examples of aliphatic diamines other than the aliphatic diamines having 6 to 12 carbon atoms include linear aliphatic diamines such as 1,4-butanediamine and 1,5-pentanediamine.

The semi-aromatic polyamide may contain diamine components other than the aliphatic diamine component as the diamine component, to the extent that the effects of the present invention are not impaired. Examples of other diamines include alicyclic diamines such as isophoronediamine, norbornanedimethylamine, and tricyclodecanedimethylamine, and aromatic diamines such as meta-xylylenediamine, para-xylylenediamine, meta-phenylenediamine, and para-phenylenediamine.

The semi-aromatic polyamide may be copolymerized with a lactam such as ε-caprolactam, ζ-enantholactam, η-capryllactam, or ω-laurolactam, to the extent that the effects of the present invention are not impaired.

It is preferable to select the types and copolymerization ratios of the monomers constituting the semi-aromatic polyamide such that the melting point (Tm) of the resulting semi-aromatic polyamide is in the range of 270 to 350°C. In the semi-aromatic polyamide, thermal decomposition during processing into a film can be efficiently suppressed when the Tm is in the aforementioned range. When the Tm is lower than 270°C, the resulting film may have insufficient heat resistance. On the other hand, when the Tm is higher than 350°C, thermal decomposition may occur during film production.

The limiting viscosity of the semi-aromatic polyamide is preferably 0.8 to 2.0 dL/g, and is more preferably 0.9 to 1.8 dL/g. When the semi-aromatic polyamide has a limiting viscosity of 0.8 dL/g or more, it is possible to produce films with excellent mechanical strength, but when the limiting viscosity exceeds 2.0 dL/g, it may be difficult to produce films.

The semi-aromatic polyamide may contain a polymerization catalyst or a terminal capping agent. Examples of the terminal capping agent include acetic acid, lauric acid, benzoic acid, octylamine, cyclohexylamine, and aniline. Also, examples of the polymerization catalyst include phosphoric acid, phosphorous acid, hypophosphorous acid, and salts thereof.

As the semi-aromatic polyamide, commercially available products can be suitably used. Examples of such commercially available products include "Genestar (R)" manufactured by Kuraray Co., Ltd., "XecoT (R)" manufactured by Unitika Ltd., "Reny (R)" manufactured by Mitsubishi Engineering-Plastics Corporation, "Arlen (R)" manufactured by Mitsui Chemicals, Inc., "Ultramid (R)" manufactured by BASF SE, and Nylon-MXD6 manufactured by Mitsubishi Gas Chemical Company, Inc.

The semi-aromatic polyamide can be produced using methods known as methods for producing crystalline polyamides. Examples thereof include the following methods: a solution polymerization method or interfacial polymerization method using an acid chloride and a diamine component as raw materials (method A) ; a method to produce a low grade polymer using a dicarboxylic acid component and a diamine component as raw materials and to make the low grade polymer have a high molecular weight by melt polymerization or solid phase polymerization (method B) ; a method to produce a crushed mixture of a salt and a low grade polymer using a dicarboxylic acid component and a diamine component as raw materials and to subject it to solid phase polymerization (method C); and a method to produce a salt using a dicarboxylic acid component and a diamine component as raw materials and to subject it to solid phase polymerization (method D). Among them, the method C and the method D are preferable, and the method D is more preferable. Compared to the method B, the method C and the method D can produce the crushed mixture of salt and low grade polymer or the salt at a lower temperature, and do not require a large amount of water when producing the crushed mixture of salt and low grade polymer or the salt. Therefore, generation of gelatinous materials can be reduced, and fish eye can be reduced.

In the method B, for example, a low grade polymer can be obtained by mixing a diamine component, a dicarboxylic acid component, and a polymerization catalyst in a batch to prepare a nylon salt, and then subjecting the nylon salt to thermal polymerization at a temperature of 200 to 250°C. It is preferable that the low grade polymer have a limiting viscosity of 0.1 to 0.6 dL/g. By setting the limiting viscosity of the low grade polymer to this range, there is an advantage that the molar balance between carboxyl groups in the dicarboxylic acid component and amino groups in the diamine component is not disrupted in the subsequent solid phase polymerization or melt polymerization and the polymerization speed can be accelerated. When the low grade polymer has a limiting viscosity of less than 0.1 dL/g, the polymerization time may become longer and the productivity may be inferior. On the other hand, when the limiting viscosity exceeds 0.6 dL/g, the resulting semi-aromatic polyamide may be colored.

The solid phase polymerization of the low grade polymer is preferably carried out under reduced pressure or under inert gas circulation. Also, the temperature of solid phase polymerization is preferably 200 to 280°C. By setting the temperature of solid phase polymerization to this range, coloration or gelation of the resulting semi-aromatic polyamide can be suppressed. When the temperature of solid phase polymerization is lower than 200°C, the polymerization time may become longer, resulting in inferior productivity. On the other hand, when the temperature is higher than 280°C, coloring or gelation may occur in the resulting semi-aromatic polyamide.

The melt polymerization of the low grade polymer is preferably carried out at a temperature of 350°C or lower. When the polymerization temperature is higher than 350°C, decomposition and thermal degradation of the semi-aromatic polyamide may be accelerated. Therefore, films obtained from such a semi-aromatic polyamide may be inferior in strength and appearance. Note that the melt polymerization described above includes melt polymerization using a melt extruder, as well.

In the method C, for example, a suspension made of an aliphatic diamine in a molten state and a solid aromatic dicarboxylic acid is stirred and mixed to obtain a mixed solution. Then, in this mixed solution, a reaction between the aromatic dicarboxylic acid and the aliphatic diamine to produce a salt and a polymerization reaction of the produced salt to produce a low grade polymer are carried out at a temperature lower than the melting point of the semi-aromatic polyamide that will be produced in the end, thereby obtaining a mixture of salt and low grade polymer. In this case, crushing may be carried out while allowing the reactions to take place, or crushing may be carried out after the mixture is removed once after the reactions. Then, the resulting reactants are subjected to solid phase polymerization at a temperature lower than the melting point of the semi-aromatic polyamide that will be produced in the end, and are made to have a high molecular weight up to a predetermined molecular weight, thereby obtaining the semi-aromatic polyamide. It is preferable that the solid phase polymerization be carried out at a polymerization temperature of 180 to 270°C and for a reaction time of 0.5 to 10 hours in an inert gas stream such as nitrogen.

In the method D, for example, aromatic dicarboxylic acid powder is heated in advance to a temperature at or higher than the melting point of the aliphatic diamine and at or lower than the melting point of the aromatic dicarboxylic acid, and to the aromatic dicarboxylic acid powder at this temperature, an aliphatic diamine is added with substantially free of water so as to maintain the powder state of the aromatic dicarboxylic acid, thereby preparing a salt. Then, the resulting salt is subjected to solid phase polymerization at a temperature lower than the melting point of the semi-aromatic polyamide that will be produced in the end, and is made to have a high molecular weight up to a predetermined molecular weight, thereby obtaining the semi-aromatic polyamide. It is preferable that the solid phase polymerization be carried out at a polymerization temperature of 180 to 270°C and for a reaction time of 0.5 to 10 hours in an inert gas stream such as nitrogen.

The semi-aromatic polyamide film constituting the laminated film of the present invention is made of the semi-aromatic polyamide described above, and in order to further improve its various characteristics, it may contain, as necessary, to the extent that the various characteristics as a film are not sacrificed, the following additive agents: a lubricant; a coloring agent such as a pigment including titanium or a dye; an anti-coloring agent; a thermal stabilizer, an antioxidant such as hindered phenol, a phosphate ester, or a phosphite ester; a weatherability modifier such as a benzotriazole compound; a bromine-based or phosphorus-based flame retardant; a plasticizer; a mold release agent; a reinforcing agent such as talc; a modifier; an antistatic agent; an ultraviolet absorber; an anti-fogging agent; and a variety of polymer resins.

As the lubricant that provides good slipperiness, the same type of fine particles as those contained in a resin layer, which will be described later, can be used. Examples of such lubricants include inorganic particles such as silica, alumina, titanium dioxide, calcium carbonate, kaolin, and barium sulfate. In addition, examples of such organic fine particles include acrylic resin particles, melamine resin particles, silicone resin particles, and crosslinked polystyrene particles.

It is preferable that the lubricant have an average particle diameter of 0.05 to 5.0 $\mu$m, and that the lubricant content be 0.3% by mass or less. It is more preferable to use the lubricant at a content of 0.2% by mass or less when the average particle diameter is 0.05 to 2.0 $\mu$m, and at a content of 0.1% by mass or less when the average particle diameter is 2.1 to 5.0 $\mu$m, because the slipperiness of the semi-aromatic polyamide film can be efficiently improved. However, the average particle diameter and content of the lubricant can be selected in accordance with the frictional characteristics, optical characteristics, and other characteristics required for the film. Although the lubricant can be added to the extent that it does not impair transparency, it is preferable not to add it in order to achieve high transparency.

A variety of methods can be used to make the additive agents described above contained in the semi-aromatic polyamide film. The following methods are representative examples of such methods:

(A) a method for adding additive agents during polymerization of the semi-aromatic polyamide;
(B) a masterbatch method in which additive agents are directly added to the semi-aromatic polyamide and melt-kneaded pellets are prepared;
(C) a method in which additive agents are directly added to the semi-aromatic polyamide during film production and melt-kneaded in an extruder; and
(D) a method in which additive agents are directly added to an extruder and melt-kneaded.

Raw materials of the semi-aromatic polyamide film may be a mixture of virgin raw materials, may be a mixture of substandard films produced during production of the semi-aromatic polyamide film or scraps generated as edge trims, or may be a mixture of the scrap mixture with virgin raw materials. These mixings can be carried out by known methods, such as a method of dry blending using a known device, or a kneading method in which a single-screw or twin-screw extruder is used to melt, knead, and mix the materials.

The surface of the semi-aromatic polyamide film may be subjected to a corona treatment, a plasma treatment, an acid treatment, a flame treatment, or the like in order to provide good close adhesion with the resin layer.

The semi-aromatic polyamide film can be a monolayer film made of one type of layer, or can have a multilayer structure formed by laminating two or more types of layers. When the multilayer structure is employed, for example, in a film with a two-layer structure, the lubricant can be contained in any one layer of the two layers, and in a film with a three-layer structure, the lubricant can be contained in each of the layers located on both surfaces of the three layers. The type and content of the lubricant to be contained can be designed independently of each other. By employing such a multilayer structure, the surface roughness of each surface of the semi-aromatic polyamide film can be independently controlled.

<Resin Layer>

The resin constituting the resin layer is not particularly limited, and a variety of resins can be used. Examples of the resins include a polyamide-based resin, a polyester-based resin, a polyurethane-based resin, an acrylic resin, and an epoxy-based resin. Among them, a polyamide-based resin, a polyester-based resin, a polyurethane-based resin, and an acrylic resin are preferable because of their excellent adhesiveness with a hard coat layer, and furthermore, a polyamide-based resin and a polyester-based resin are more preferable from the viewpoint of heat resistance.

(Polyamide-based Resin)

The polyamide-based resin constituting the resin layer is not particularly limited, and an aliphatic polyamide, an alicyclic polyamide, an aromatic polyamide, and the like can be used. The aromatic polyamide includes a semi-aromatic polyamide and a fully aromatic polyamide (aramid). Note that, from the viewpoint of improving adhesiveness with the semi-aromatic polyamide used as the base material, the same type of semi-aromatic polyamide can also be used as the resin layer. Among these polyamide-based resins, a dimer acid-based polyamide is preferable from the viewpoint of excellent balance between heat resistance and adhesiveness with the hard coat layer.

The dimer acid-based polyamide has amide bonds in the main chain and is obtained mainly by a dehydrative condensation reaction using a dimer acid as the dicarboxylic acid component and a diamine component. The dimer acid-based polyamide has flexibility because it has larger hydrocarbon groups than resins such as nylon 6, nylon 66, and nylon 12, which are widely used as polyamide resins.

In the present invention, the dimer acid-based polyamide preferably includes the dimer acid as the dicarboxylic acid component at a content of 50 mol% or more out of the entire dicarboxylic acid component, more preferably at a content of 60 mol% or more, and even more preferably at a content of 70 mol% or more. When the proportion of dimer acid is less than 50 mol%, it becomes difficult to achieve the characteristics and effects of the dimer acid-based polyamide.

Here, the dimer acid is obtained by dimerization of an unsaturated fatty acid having 18 carbon atoms, such as oleic acid and linolenic acid, and may include a monomeric acid (18 carbon atoms), which is a monomer, a trimeric acid (54 carbon atoms), which is a trimer, and other polymerized fatty acids having 20 to 54 carbon atoms, as long as they account for 25% by mass or less of the dimer acid component. Furthermore, its degree of unsaturation may be lowered by hydrogenation. The dimer acid is commercially available as the Haridimer series (manufactured by Harima Chemicals Group, Inc.), the Pripol series (manufactured by Croda Japan KK), the Tsunodyme series (manufactured by Tsuno Food Industrial Co., Ltd.), and the like, and these can be used.

When a component other than the dimer acid is used as the dicarboxylic acid component of the dimer acid-based polyamide, it is preferable to use adipic acid, azelaic acid, sebacic acid, pimelic acid, suberic acid, nonanedicarboxylic acid, fumaric acid, or the like. When they are contained at less than 50 mol%, it becomes easier to control the softening point and adhesiveness of the resin.

Also, as the diamine component of the dimer acid-based polyamide, it is possible to use ethylenediamine, hexamethylenediamine, tetramethylenediamine, pentamethylenediamine, m-xylenediamine, phenylenediamine, diethylenetriamine, piperazine, or the like. Among them, ethylenediamine, hexamethylenediamine, diethylenetriamine, m-xylenediamine, and piperazine are preferable.

When polymerizing the dimer acid-based polyamide, it is possible to control the degree of polymerization, acid value, or amine value of the resin by, for example, changing the charging ratios of the dicarboxylic acid component and the diamine component.

In the present invention, the amine value of the dimer acid-based polyamide is preferably less than 1.0 mg KOH/g, more preferably less than 0.7 mg KOH/g, and even more preferably less than 0.4 mg KOH/g. When the dimer acid-based polyamide used has an amine value of 1.0 mg KOH/g or more, heat resistance may be reduced.

In addition, the acid value of the dimer acid-based polyamide is preferably 1 to 20 mg KOH/g, more preferably 1 to 15 mg KOH/g, even more preferably 3 to 12 mg KOH/g, and most preferably 3 to 7 mg KOH/g. When the dimer acid-based polyamide has an acid value of less than 1 mg KOH/g, it becomes difficult to obtain a stable one as a coating agent for resin layer formation. On the other hand, when the acid value exceeds 20 mg KOH/g, the chemical resistance, which is originally a good characteristic of the dimer acid-based polyamide, may be reduced.

Note that the acid value is defined as the number of milligrams of potassium hydroxide required to neutralize the acidic component contained in 1g of resin. On the other hand, the amine value is expressed as the number of milligrams of potassium hydroxide that is the molar equivalent of the base component in 1g of the resin. Both are measured by the methods described in JIS K2501.

The softening point of the dimer acid-based polyamide is preferably 70 to 250°C, more preferably 80 to 240°C, and even more preferably 80 to 200°C. When the softening point is lower than 70°C, the resulting resin layer tends to have lower heat resistance and also tends to have higher tackiness at room temperature. On the other hand, when the softening point is higher than 250°C, it tends to become difficult to prepare the coating agent for resin layer formation by dispersing the dimer acid-based polyamide in an aqueous medium, and there is also a possibility that the resulting resin layer may not have sufficient adhesiveness due to insufficient flowability of the resin when adhered.

(Polyester-based Resin)

The polyester resin constituting the resin layer is not particularly limited, and examples thereof include one that is made of a polybasic acid component and a polyhydric alcohol component and is produced by known polymerization methods. A single polyester resin may be used, or two or more polyester resins may be used in combinations. In addition, as will be mentioned later, it is preferable that the polyester resin be a copolymerized polyester resin that can be made waterborne, in order to prepare the coating agent for resin layer formation.

Examples of commercial products of the polyester resin described above may include "elitel KA-5034", "KZA-0134", and "KZA-3556" (all manufactured by Unitika Ltd.), and "Plascoat Z-730" and "RZ-142" (both manufactured by Goo Chemical Co., Ltd.).

Among polyester resins, a polyester whose glycol component contains tricyclodecanedimethanol (hereinafter, referred to as a TCD-based polyester) can be preferably used because of its high adhesiveness to an acrylic resin.

In the TCD-based polyester, the content of tricyclodecanedimethanol in the glycol component is preferably 50 to 100 mol%, more preferably 55 to 95 mol%, and even more preferably 60 to 90 mol%. When the content of tricyclodecanedimethanol in the glycol component of the TCD-based polyester is less than 50 mol%, the resulting resin layer may have reduced adhesiveness to an acrylic hard coat layer.

Examples of glycol components other than tricyclodecanedimethanol constituting the TCD-based polyester include: aliphatic glycols such as ethylene glycol, 1,2-propanediol, 1,3-propanediol, 1,4-butanediol, 2-methyl-1,3-propanediol, 1,5-pentanediol, 1,6-hexamethylenediol, neopentyl glycol, 3-methyl-1,5-pentanediol, 1,9-nonanediol, and 2-ethyl-2-butylpropanediol; alicyclic glycols such as 1,4-cyclohexanedimethanol and 1,3-cyclobutanedimethanol ; and trifunctional or higher alcohols such as glycerin, trimethylolethane, trimethylolpropane, and pentaerythritol.

As the dicarboxylic acid component constituting the TCD-based polyester, for example, an aromatic dicarboxylic acid, a saturated aliphatic dicarboxylic acid, and the like can be used in combination. When the aromatic dicarboxylic acid and the saturated aliphatic dicarboxylic acid are used in combination, the molar ratio therebetween (aromatic dicarboxylic acid component/saturated aliphatic dicarboxylic acid component) is preferably 70/30 to 95/5, more preferably 73/27 to 93/7, and even more preferably 75/25 to 90/10.

As the saturated aliphatic dicarboxylic acid, adipic acid and sebacic acid are preferable, and sebacic acid is more preferable in that it has higher effects on improving the alcohol resistance of the resulting TCD-based polyester. A resin layer containing the TCD-based polyester with improved alcohol resistance is particularly preferable because of its increased durability, as well as increased durability of adhesiveness and the like when, for example, an acrylic resin-containing layer or the like is laminated on the resin layer.

(Polyurethane-based resin)

When the resin layer is constituted from a polyurethane-based resin, the laminated film of the present invention has high transparency, excellent flex resistance, impact resistance, and easy adhesiveness, as well as excellent optical characteristics in that interference fringes are unlikely to occur when a functional layer is laminated on the resin layer surface. Therefore, the laminated film can be used for various applications by laminating various functional layers on the resin layer.

The polyurethane resin constituting the resin layer is not particularly limited, and examples thereof may include a variety of polyurethane resins such as a polyester-based urethane resin, a polyether-based urethane resin, and a polycarbonate-based urethane resin.

The polyurethane-based resin is a resin that can be obtained by allowing a polyol component and a polyisocyanate component to react with each other. Examples of the polyol component include polyester polyols, polyether polyols, polycarbonate polyols, polyolefin polyols, and acrylic polyols, and several of these polyols may be used. Among them, from the viewpoint of, for example, making interference fringes less visible when a functional layer is laminated on the resin layer surface, it is preferable that the polyol component be polyester polyols, and therefore, it is preferable that the polyurethane-based resin be a polyester-based urethane resin.

The polyester polyols are produced by subjecting one or two or more polyvalent carboxylic acids and polyhydric alcohols to condensation polymerization by ordinary methods.

Examples of the polyvalent carboxylic acid include: aromatic dicarboxylic acids such as terephthalic acid, isophthalic acid, phthalic acid, 1,4-naphthalenedicarboxylic acid, 2,5-naphthalenedicarboxylic acid, 2,6-naphthalenedicarboxylic acid, biphenyldicarboxylic acid, and 1,2-bis(phenoxy)ethane-p,p-dicarboxylic acid, and anhydrides or ester-forming derivatives thereof; and aromatic hydroxycarboxylic acids such as p-hydroxybenzoic acid and p-(2-hydroxyethoxy)benzoic acid, and ester-forming derivatives thereof. Examples of the polyvalent carboxylic acid also include: aliphatic dicarboxylic acids such as succinic acid, adipic acid, azelaic acid, sebacic acid, maleic anhydride, and fumaric acid; and alicyclic dicarboxylic acids such as 1,3-cyclopentanedicarboxylic acid and 1,4-cyclohexanedicarboxylic acid, and anhydrous or ester-forming derivatives thereof.

Examples of the polyhydric alcohol include: ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanolbenzene, bishydroxyethoxybenzene, alkyl dialkanolamines, and diol obtained from reactions of lactone; and those having derivative units of lactone compounds such as polycaprolactone.

In addition to the polyhydric alcohols described above, it is preferable that a polyhydric alcohol in which an alkylene oxide is added to bisphenol be contained from the viewpoint of reducing interference fringes when a functional layer is laminated. Examples of the bisphenol include bisphenol A, bisphenol F, bisphenol S, bisphenol AD, fluorinated bisphenol A, chlorinated bisphenol A, brominated bisphenol A, 4,4-bis(hydroxyphenyl) sulfide, bis(4-hydroxyphenyl)methane, bis(4-hydroxyphenyl) ether, bis(4-hydroxyphenyl)amine, and tricyclo[5,2,1,0$^{2,6}$]decanediphenol. Examples of the alkylene oxide to be added to hydroxy groups of bisphenol include ethylene oxide and propylene oxide. Examples of the polyhydric alcohol in which an alkylene oxide is added to bisphenol include bisphenol A-ethylene oxide adduct.

Examples of the polyether polyols include polyethylene glycol, polypropylene glycol, polyethylene propylene glycol, polytetramethylene ether glycol, and polyhexamethylene ether glycol.

The polycarbonate polyols are obtained from polyhydric alcohols and carbonate compounds by a dealcoholization reaction.

Examples of the polyhydric alcohols include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexanedimethanol, 1,7-heptanediol, 1,8-octanediol, 1,9-nonanediol, 1,10-decanediol, neopentyl glycol, 3-methyl-1,5-pentanediol, and 3,3-dimethylolheptane.

Examples of the carbonate compound include dimethyl carbonate, diethyl carbonate, diphenyl carbonate, and ethylene carbonate.

Examples of polycarbonate-based polyols obtained from reactions between them include poly(1,6-hexylene)carbonate and poly(3-methyl-1,5-pentylene)carbonate.

Examples of the polyolefin polyols include polybutadiene polyol and hydrogenated polybutadiene polyol.

Typical examples of the polyacrylic polyols include a copolymer of (meth)acrylic ester monomers and monomers having hydroxy groups.

Examples of the (meth)acrylic ester monomers include methyl (meth)acrylate, butyl (meth)acrylate, 2-ethylhexyl (meth)acrylate, and cyclohexyl (meth)acrylate.

Examples of the monomers having hydroxy groups include: hydroxyalkyl esters of (meth)acrylic acid such as 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, and 2-hydroxypentyl (meth)acrylate; (meth)acrylic acid monoesters of polyhydric alcohols such as glycerin and trimethylolpropane; and N-methylol (meth)acrylamide.

As the polyisocyanate component that is allowed to react with the polyol component described above, for example, the following can be used: an aliphatic diisocyanate such as tetramethylene diisocyanate, dodecamethylene diisocyanate, 1,4-butane diisocyanate, hexamethylene diisocyanate, 2,2,4-trimethylhexamethylene diisocyanate, 2,4,4-trimethylhexamethylene diisocyanate, lysine diisocyanate, 2-methylpentane-1,5- diisocyanate, and 3-methylpentane-1,5- diisocyanate; an alicyclic diisocyanate such as isophorone diisocyanate, hydrogenated xylylene diisocyanate, 4,4'-cyclohexylmethane diisocyanate, 1,4-cyclohexane diisocyanate, methylcyclohexylene diisocyanate, and 1,3-bis(isocyanatemethyl)cyclohexane; an aromatic diisocyanate such as tolylene diisocyanate, 2,2'-diphenylmethane diisocyanate, 2,4'-diphenylmethane diisocyanate, 4,4'-diphenylmethane diisocyanate, 4,4'-diphenyldimethylmethane diisocyanate, 4,4'-dibenzyl diisocyanate, 1,5-naphthalene diisocyanate, xylylene diisocyanate, 1,3-phenylene diisocyanate, and 1,4-phenylene diisocyanate; and an araliphatic diisocyanate such as dialkyldiphenylmethane diisocyanate, tetraalkyldiphenylmethane diisocyanate, and $\alpha,\alpha,\alpha',\alpha'$-tetramethylxylylene diisocyanate.

A chain extender may be used when synthesizing the polyurethane resin. There are no particular restrictions on the chain extender as long as it has two or more active groups that react with isocyanate groups, and in general, a chain extender having two hydroxy groups or amino groups can be mainly used.

Examples of the chain extender having two hydroxy groups may include a glycol including: an aliphatic glycol such as ethylene glycol, propylene glycol, and butanediol; an aromatic glycol such as xylylene glycol and bishydroxyethoxybenzene; and an ester glycol such as neopentyl glycol hydroxypivalate.

In addition, examples of the chain extender having two amino groups include: an aromatic diamine such as tolylenediamine, xylylenediamine, and diphenylmethanediamine; an aliphatic diamine such as ethylenediamine, propylenediamine, hexanediamine, 2,2-dimethyl-1,3-propanediamine, 2-methyl-1,5-pentanediamine, trimethylhexanediamine, 2-butyl-2-ethyl-1,5-pentanediamine, 1,8-octanediamine, 1,9-nonanediamine, and 1,10-decanediamine; and an alicyclic diamine such as 1-amino-3-aminomethyl-3,5,5-trimethylcyclohexane, dicyclohexylmethanediamine, isopropylidenecyclohexyl-4,4'-diamine, 1,4-diaminocyclohexane, and 1,3-bisaminomethylcyclohexane.

The polyurethane-based resin constituting the resin layer may be further copolymerized with a compound having a sulfo group or a compound having a carboxyl group from the viewpoint of improving the close adhesion between the base film and a functional layer or improving the dispersibility in water when obtaining an aqueous dispersion, which will be mentioned later.

The polyurethane-based resin constituting the resin layer is not particularly limited, but it is preferable that the polyurethane-based resin be a waterborne urethane resin, due to the problem of residual solvents in the resin layer and less polluting properties to the environment. As the waterborne urethane resin, mention may be made of an ionomer-type self-emulsifying polyurethane resin. Mention may also be made of a water dispersion-type urethane resin whose terminal carboxyl group is neutralized with a cation such as amine, ammonia, or sodium, or that is neutralized with an anion such as a carboxylic acid or halogen. Also, a urethane-urea resin (melamine-urea resin) can be used in the same manner. In order to form the resin layer, it is preferable to use an aqueous dispersion in which these waterborne urethane resins are dispersed in an aqueous medium.

As the polyurethane-based resin, commercially available polyurethane resins may be used. Examples of water dispersions of polyurethane resins, which are in a form preferably used for forming the resin layer in the production method of the present invention as will be mentioned later, include the Hydran series manufactured by DIC Corporation, the Superflex series manufactured by DKS Co., Ltd., the Takelac series manufactured by Mitsui Chemicals Inc., the Adeka Bontighter series manufactured by Adeka Corporation, and Ucoat manufactured by Sanyo Chemical Ltd.

In order to improve close adhesion to the semi-aromatic polyamide film and solvent resistance, it is preferable for the resin layer to contain a curing agent along with the polyurethane-based resin. Examples of the curing agent include an isocyanate compound, a melamine compound, an epoxy compound, an oxazoline compound, a carbodiimide compound, and an aziridine compound. These compounds may be blended singly or in multiples into the coating agent for resin layer formation so that they do not interfere with the pot life or performance. In terms of curability and pot life, it is preferable to use a melamine compound, an oxazoline compound, or an isocyanate compound. Among them, in order to control reactivity and impart storage stability, it is preferable to use a methylolated melamine compound having methylol groups alkoxylated, and an oxazoline compound.

(Acrylic Resin)

The acrylic resin constituting the resin layer is not particularly limited, but examples thereof include those mainly composed of ethyl acrylate, butyl acrylate, 2-ethylhexyl acrylate, or the like, and copolymerized with a vinyl compound such as styrene, methyl methacrylate, and acrylonitrile, as well as a functional group monomer such as acrylic acid, methacrylic acid, itaconic acid, acrylamide, methylol acrylamide, hydroxyethyl acrylate, hydroxyethyl methacrylate, or the like. In order to form the resin layer, it is preferable to use an aqueous dispersion in which these acrylic resins are dispersed in an aqueous medium. Here, acrylic particles can be used as the fine particles contained in the resin layer, and that is, the resin layer can also be formed by applying and drying an acrylic resin aqueous dispersion containing acrylic particles.

<Additive Agents>

To the resin layer, the following can be added as necessary to the extent that they do not impair physical properties such as adhesiveness and heat resistance: a variety of agents such as a leveling agent, a defoaming agent, an anti-popping agent, a pigment distributing agent, and an ultraviolet absorber, as well as pigments or dyes such as titanium oxide, zinc oxide, and carbon black.

It is preferable for the resin layer to contain a crosslinking agent in terms of improving adhesiveness to the adherend. By crosslinking the resin constituting the resin layer with the crosslinking agent, it is possible to obtain a resin layer that exhibits low flowability even when heated to the softening point or higher (low flowability under a high temperature).

As the crosslinking agent, anything can be used as long as it can crosslink the resin constituting the resin layer. For example, a hydrazide compound, an isocyanate compound, a melamine compound, a urea compound, an epoxy compound, a carbodiimide compound, and an oxazoline compound are preferable, and these compounds can be used singly or in a mixture. Among them, an oxazoline compound, a carbodiimide compound, an epoxy compound, and an isocyanate compound are suitable. Besides, one that has self-crosslinking properties or one that has polyvalent coordination sites can also be used as the crosslinking agent.

In the present invention, commercially available crosslinking agents may be used due to their ease of availability. Specifically, the APA series (APA-M950, APAM980, APA-P250, APA-P280, and the like) manufactured by Otsuka Chemical Co., Ltd. can be used as the hydrazide compound. The following can be used as the isocyanate compound: BASONAT PLR8878 and BASONAT HW-100 manufactured by BASF SE; Bayhydur 3100 and Bayhydur VPLS2150/1 manufactured by Sumitomo Bayer Urethane Co., Ltd.; and the like. As the melamine compound, Cymel 325 manufactured by Mitsui Cytec, Ltd. and the like can be used. As the urea compound, the BECKAMINE series manufactured by DIC Corporation and the like can be used. As the epoxy compound, the Denacol series (EM-150, EM-101, and the like) manufactured by Nagase ChemteX Corporation, Adeka Resin EM-0517, EM-0526, EM-051R, and EM-11-50B manufactured by Adeka Corporation, and the like can be used. As the carbodiimide compound, the Carbodilite series (SV-02, V-02, V-02-L2, V-04, E-01, E-02, V-01, V-03, V-07, V-09, and V-05) manufactured by Nisshinbo Chemical Inc. and the like can be used. As the oxazoline compound, the Epocros series (WS-500, WS-700, K-1010E, K-1020E, K-1030E, K-2010E, K-2020E, and K-2030E) manufactured by Nippon Shokubai Co., Ltd. and the like can be used. They are commercially available as dispersions or solutions containing crosslinking agents.

When the resin layer in the present invention contains the crosslinking agent, it is preferable that the crosslinking agent be contained at 0.5 to 50 parts by mass relative to 100 parts by mass of the resin constituting the resin layer. When the content of the crosslinking agent is less than 0.5 parts by mass, it becomes difficult to obtain the desired crosslinking effects in the resin layer, such as low flowability at a high temperature. On the other hand, when the content of the crosslinking agent exceeds 50 parts by mass, as a result of a decrease in the liquid stability and processability of the coating agent for resin layer formation, which will be mentioned later, it may become difficult to obtain the basic performance as the resin layer.

(Thickness)

The thickness of the resin layer is required to be 0.03 to 0.5 $\mu$m, and it is preferably 0.04 to 0.4 $\mu$m, more preferably 0.05 to 0.35 $\mu$m, and even more preferably 0.06 to 0.3 $\mu$m. When the thickness of the resin layer is less than 0.03 $\mu$m, not only does it become difficult to form a uniform resin layer and to obtain sufficient close adhesion with the base film or a functional layer, but also, when the resin layer contains fine particles, there is a risk that the fine particles may fall out of the resin layer or that interference fringes may be strongly observed when the functional layer is laminated. When the thickness of the resin layer exceeds 0.5 $\mu$m, slipperiness and transparency may be reduced. Also, when the thickness is outside the range described above, if the laminated film is rolled, the film may not be unwound well from the film roll, and may have poor blocking resistance.

Note that the thickness of the resin layer can be measured using a variety of methods. For example, mention may be made of a method in which the resin layer is peeled off from the laminated film using a solvent or the like, the mass per unit area of the resin layer is then determined from the difference in mass before and after the peeling, and the thickness is calculated from this and the density of the resin layer, and a method in which the thickness is measured by observing the cross-section of the laminated film in which the resin layer has been formed, using a microscope or the like. In the present invention, the latter, observation of the cross-section, was carried out to measure the thickness of the resin layer. Note that, when the resin layer contains fine particles whose average particle diameter is larger than the thickness of the resin layer, the thickness of the resin layer in the area where the fine particles do not exist was measured.

(Fine Particles)

In the laminated film of the present invention, the resin layer can contain inorganic and/or organic fine particles.

As the fine particles contained in the resin layer, fine particles for a lubricant that provides good slipperiness and blocking resistance can be used. Examples thereof include fine particles of inorganic compounds such as silica, alumina, titanium dioxide, calcium carbonate, kaolin, barium sulfate, zinc oxide, niobium oxide, neodymium oxide, lanthanum oxide, zirconium oxide, cerium oxide, and magnesium oxide. Also, examples of the organic fine particles include acrylic particles, melamine particles, silicone particles, polyimide particles, crosslinked polyester particles, crosslinked polystyrene particles, crosslinked polyethylene particles, crosslinked polypropylene particles, silicone particles, nylon particles, polyacrylonitrile particles, benzoguanamine-formaldehyde resin particles, styrene divinylbenzene copolymer particles, and acryl-divinylbenzene copolymer.

These inorganic and organic particles can be used singly or in blends of multiples, and may be subjected to a surface treatment to enhance their dispersibility and adhesiveness.

The average particle diameter of the fine particles is preferably 0.010 to 5.0 $\mu$m, more preferably 0.030 to 4.0 $\mu$m, and even more preferably 0.050 to 3.0 $\mu$m. The average particle diameter of the fine particles can be selected in accordance with the frictional characteristics, optical characteristics, blocking resistance, and other characteristics required for the film. From the viewpoint of frictional characteristics, those having a larger average particle diameter are desirable. Specifically, the average particle diameter is preferably 0.30 to 5.0 $\mu$m, more preferably 0.40 to 3.0 $\mu$m, and even more preferably 0.50 to 2.0 $\mu$m. From the viewpoint of blocking resistance, those having a smaller average particle diameter are desirable. Specifically, the average particle diameter is preferably 0.010 to 0.50 $\mu$m, more preferably 0.020 to 0.30 $\mu$m, and even more preferably 0.030 to 0.20 $\mu$m.

In the present invention, as the fine particles contained in the resin layer, it is preferable to use two or more types of fine particles from the viewpoint of achieving both frictional characteristics and blocking resistance. In that case, it is more preferable to use two or more types with the larger and smaller average particle diameters mentioned above in combination.

The content of the fine particles in the resin layer is preferably 0.1 to 25% by mass, more preferably 1 to 20% by mass, and even more preferably 5 to 18% by mass. When the content of the fine particles is less than 0.1% by mass, the effects of adding the fine particles are not fully demonstrated, blocking between the films may not be sufficiently suppressed, and slipperiness may also be insufficient, resulting in inferior runnability. On the other hand, when the content of the fine particles exceeds 25% by mass, transparency may be reduced and a reduction in the close adhesion of the resin layer may occur. When two or more types of fine particles are used in combination, the total amount thereof is preferably 0.1 to 25% by mass.

Note that the resin layer constituting the laminated film of the present invention has improved close adhesion to the base film and also has improved close adhesion to the fine particles contained in the resin layer. Accordingly, the fine particles contained in the resin layer will not fall out of the resin layer even when their average particle diameter is larger than the thickness of the resin layer.

<Laminated Film>

The laminated film of the present invention is excellent in close adhesion between the base film and the resin layer, and the close adhesion measured by the cross-cut method described in JIS K 5600, which is indicated as the proportion of the resin layer lattice remaining on the base film, is 95% or more, preferably 96% or more, and more preferably 97%.

Since the laminated film of the present invention is constituted from the resin layer and the semi-aromatic polyamide film, it is preferable that the laminated film has transparency and has a haze of 3% or less.

Also, since the laminated film of the present invention has the resin layer laminated therein, it is excellent in slipperiness, and the dynamic friction coefficient on the surface of the resin layer under an atmosphere of 23°C × 50% RH is preferably 0.7 or less, more preferably 0.6 or less, and even more preferably 0.5 or less. The friction coefficient of the resin layer can be controlled by appropriately adjusting the particle diameter, content, and the like of the contained fine particles, or, if several types of fine particles are used in combination, the particle size distribution of the fine particles resulting from the combination, and it can be made lower than that of the base film.

In addition, since the laminated film of the present invention includes the semi-aromatic polyamide film as its base material, it has a low thermal shrinkage factor. The thermal shrinkage factor after a treatment at 250°C for 5 minutes is preferably 3% or less, more preferably 2.5% or less, and even more preferably 2.0% or less.

The laminated film of the present invention is, as described above, excellent in close adhesion between the semi-aromatic polyamide film and the resin layer.

Accordingly, the laminated film of the present invention can be used as a single-sided adhesive film for adherence to the adherend or as a both-sided adhesive film for adherence between the adherends, while achieving both transparency and slipperiness, and can be used to produce articles in which the semi-aromatic polyamide film and the adherend are adhered.

(Method for Producing Laminated Film)

Next, a method for producing the laminated film will be described.

The laminated film of the present invention is obtained by, for example, laminating the resin layer after obtaining the semi-aromatic polyamide film or in the step of forming the semi-aromatic polyamide film. Examples of the method of lamination include a method of applying solutions of a variety of solvents or an aqueous dispersion of the resin constituting the resin layer and a method of thermally melting the resin and performing extrusion coating. Another method is to form a resin layer on the outermost layer during multilayer extrusion of unstretched sheets of semi-aromatic polyamide film.

Regardless of the means described above, any means may be used to provide the resin layer on at least one surface of the semi-aromatic polyamide film, as long as the resin layer is steadily formed on at least one surface of the semi-aromatic polyamide film.

Note that, when the resin layer contains fine particles, it is preferable that the fine particles not be completely buried in the resin layer, but that a part of or most of the fine particles be exposed outside the resin layer and the fine particles also be in a state where they do not fall out of the resin layer. In this state, the laminated film can ensure good slipperiness even when no lubricant is contained in the semi-aromatic polyamide film, and moreover, the transparency of the semi-aromatic polyamide film is not impaired.

The laminated film of the present invention can be produced by, as described above, applying a coating agent for resin layer formation to at least one surface of the semi-aromatic polyamide film to laminate the resin layer.

Specifically, it is preferable that the method for producing the laminated film include:

(a) producing an unstretched film made of semi-aromatic polyamide;
(b) applying a coating agent for resin layer formation to at least one surface of the film made of semi-aromatic polyamide to form a coating film;
(c) drying the coating film;
(d) stretching the film;
(e) subjecting the stretched film to a heat setting treatment at 250°C to (Tm - 5°C); and
(f) rolling the stretched film up.

The steps described above may be performed in the order of (a), (b), (c), (d), (e), and (f), or may be performed in the order of (a), (d), (b), (c), (d), (e), and (f) or in the order of (a), (d), (e), (b), (c), and (f).

(Coating Agent for Resin Layer Formation)

First of all, the coating agent for resin layer formation used in step (b) will be described.

The coating agent for resin layer formation is obtained by dispersing or dissolving a resin for resin layer formation, such as dimer acid-based polyamide, and fine particles and a crosslinking agent to be used as necessary, in an aqueous medium or a solvent, and it is preferably an aqueous dispersion in which the resin is dispersed in an aqueous medium in consideration of the working environment. The aqueous medium is a liquid mainly composed of water, and can contain a basic compound or a hydrophilic organic solvent, which will be mentioned later.

When the resin layer is formed with a dimer acid-based polyamide, in order to stably disperse the dimer acid-based polyamide in the aqueous medium, it is preferable to use a basic compound. By using a basic compound, some or all of the carboxyl groups included in the dimer acid-based polyamide are neutralized to produce carboxyl anions, and their electrical repulsive force breaks up the aggregation between the resin fine particles, allowing the dimer acid-based polyamide to be stably dispersed in the aqueous medium. Also, carboxyl groups in the dimer acid-based polyamide are neutralized with the basic compound, allowing it to maintain a stable form in the alkaline region. The aqueous dispersion preferably has a pH in the range of 7 to 13. As the basic compound, a basic compound with a boiling point of lower than 185°C at normal pressure is preferable.

Examples of the basic compound with a boiling point of lower than 185°C at normal pressure include ammonia and an amine such as an organic amine compound. Specific examples of the organic amine compound may include triethylamine, N,N-dimethylethanolamine, isopropylamine, iminobispropylamine, ethylamine, diethylamine, 3-ethoxypropylamine, 3-diethylaminopropylamine, sec-butylamine, propylamine, methylaminopropylamine, methyliminobispropylamine, 3-methoxypropylamine, monoethanolamine, morpholine, N-methylmorpholine, and N-ethylmorpholine. Among them, triethylamine and N,N-dimethylethanolamine are preferable as the basic compound with a boiling point of lower than 185°C at normal pressure.

When the basic compound has a boiling point of higher than 185°C at normal pressure, when the aqueous coating agent is applied to form a coating film, it becomes difficult to volatilize the basic compound, especially the organic amine compound, by drying, which may adversely affect hygiene and coating film characteristics.

The content of the basic compound in the aqueous dispersion is preferably 0.01 to 100 parts by mass relative to 100 parts by mass of the resin solid content, more preferably 1 to 40 parts by mass, and even more preferably 1 to 15 parts by mass. When the content of the basic compound is less than 0.01 parts by mass, addition of the basic compound is not so effective, and it becomes difficult to obtain an aqueous dispersion with excellent dispersion stability. On the other hand, when the content of the basic compound exceeds 100 parts by mass, there is a tendency that the aqueous dispersion is likely to be colored or gelated, or that the pH of the emulsion becomes too high.

In the present invention, when an aqueous dispersion is used as the coating agent for resin layer formation, it is preferable that it contain no aqueous conversion auxiliary agent that has a boiling point at normal pressure of 185°C or higher or that is nonvolatile. The aqueous conversion auxiliary agent that has a boiling point at normal pressure of 185°C or higher or that is nonvolatile refers to an emulsifier component, a compound with protective colloidal action, or the like. That is, in the present invention, even without the use of an aqueous conversion auxiliary agent, a stable aqueous dispersion with a fine resin particle diameter can be obtained. The use of an aqueous conversion auxiliary agent does not immediately reduce the stability of the aqueous dispersion, and thus, the present invention does not preclude the use of an aqueous conversion auxiliary agent. In the present invention, it is preferable to use as little aqueous conversion auxiliary agent as possible, and it is particularly preferable not to use it at all. However, for after the aqueous dispersion has been obtained, an aqueous conversion auxiliary agent may be actively used in accordance with the purpose. For example, it goes without saying that an aqueous conversion auxiliary agent may be added in accordance with the purpose when newly obtaining another coating agent containing the aqueous dispersion.

Examples of the emulsifier component include a cationic emulsifier, an anionic emulsifier, a nonionic emulsifier, and an amphoteric emulsifier, and include one that is generally used for emulsion polymerization, as well as surfactants. Examples of the anionic emulsifier include a sulfuric acid ester salt of a higher alcohol, a higher alkyl sulfonic acid salt, a higher carboxylic acid salt, an alkylbenzene sulfonic acid salt, a polyoxyethylene alkyl sulfate salt, a polyoxyethylene alkyl phenyl ether sulfate salt, and vinyl sulfosuccinate. Examples of the nonionic emulsifier include a compound having a polyoxyethylene structure such as a polyoxyethylene alkyl ether, a polyoxyethylene alkyl phenyl ether, a polyethylene glycol fatty acid ester, an ethylene oxide-propylene oxide block copolymer, a polyoxyethylene fatty acid amide, and an ethylene oxide-propylene oxide copolymer, and a sorbitan derivative. Also, examples of the amphoteric emulsifier include lauryl betaine and lauryl dimethylamine oxide.

Examples of the compound with protective colloidal action include polyvinyl alcohol, carboxyl group-modified polyvinyl alcohol, carboxymethyl cellulose, hydroxyethyl cellulose, hydroxypropyl cellulose, modified starch, polyvinylpyrrolidone, polyacrylic acid and a salt thereof, an acid-modified polyolefin wax and a salt thereof, normally having a number average molecular weight of 5000 or less, such as a carboxyl group-containing polyethylene wax, a carboxyl group-containing polypropylene wax, and a carboxyl group-containing polyethylene-propylene wax, an acrylic acid-maleic anhydride copolymer and a salt thereof, a carboxyl group-containing polymer and a salt thereof, having an unsaturated carboxylic acid content of 10% by mass, such as a styrene-(meth)acrylic acid copolymer, an ethylene-(meth)acrylic acid copolymer, an isobutylene-maleic anhydride alternating copolymer, and a (meth)acrylic acid-(meth)acrylic acid ester copolymer, polyitaconic acid and a salt thereof, a water-soluble acrylic copolymer having amino groups, and a compound that is generally used as a dispersion stabilizer for fine particles, such as gelatin, gum arabic, and casein.

Next, a method for producing an aqueous dispersion of the dimer acid-based polyamide will be described. As described above, the resin layer in the laminated film of the present invention is preferably formed using an aqueous dispersion in which the dimer acid-based polyamide is dispersed in an aqueous medium from the viewpoint of the working environment, but is not limited to this.

In obtaining an aqueous dispersion of the dimer acid-based polyamide, it is preferable to use a container that can be sealed. That is, a means in which each component is charged in the sealable container, heated, and stirred is preferably employed.

Specifically, first of all, a predetermined amount of the dimer acid-based polyamide, a basic compound, and an aqueous medium are introduced into a container. Note that, as previously mentioned, the aqueous medium may contain a basic compound or a hydrophilic organic solvent, which will be mentioned later, and thus, for example, when an aqueous medium containing a basic compound is used, the basic compound is consequently charged in the container even without separately introducing the basic compound.

Next, the container is sealed, and heated and stirred at a temperature of preferably 70 to 280°C, and more preferably 100 to 250°C. When the temperature during heating and stirring is lower than 70°C, dispersion of the dimer acid-based polyamide is unlikely to proceed, and it tends to be difficult to set the number average particle diameter of the resin to 0.5 $\mu$m or less. On the other hand, when the temperature is higher than 280°C, there is a risk that the molecular weight of the dimer acid-based polyamide may be reduced, and the internal pressure of the system may be increased to a non-negligible level, both of which are not preferable.

When heating and stirring, it is preferable to heat and stir the system at 10 to 1000 revolutions per minute until the resin is uniformly dispersed in the aqueous medium.

Furthermore, a hydrophilic organic solvent may also be introduced into the container. As the hydrophilic organic solvent in this case, from the viewpoint of making the particle diameter of the dimer acid-based polyamide even smaller and at the same time further promoting dispersion of the dimer acid-based polyamide in the aqueous medium, the solubility in water at 20°C is preferably 50 g/L or more, more preferably 100 g/L or more, even more preferably 600 g/L or more, and particularly preferably, a hydrophilic organic solvent that can be dissolved in water at an arbitrary ratio may be selected for use. Also, the boiling point of the hydrophilic organic solvent is preferably 30 to 250°C, and is more preferably 50 to 200°C. When the boiling point is lower than 30°C, the hydrophilic organic solvent is likely to be volatilized during preparation of the aqueous dispersion, and as a result, the meaning of using the hydrophilic organic solvent is lost and the working environment is likely to be degraded as well. On the other hand, when the boiling point is higher than 250°C, it tends to become difficult to remove the hydrophilic organic solvent from the aqueous dispersion. As a result, when the resin layer is formed, the organic solvent remains in the resin layer, which may reduce the solvent resistance and the like of the resin layer.

As in the case of the basic compound previously mentioned, the aqueous medium may contain a hydrophilic organic solvent, and thus, when an aqueous medium containing a hydrophilic organic solvent is used, the hydrophilic organic solvent is consequently charged in the container even without additionally introducing the hydrophilic organic solvent.

The hydrophilic organic solvent is preferably blended at a proportion of 60% by mass or less relative to the entirety of the components constituting the aqueous medium (water, the basic compound, and a variety of organic solvents including the hydrophilic organic solvent), more preferably at a proportion of 1 to 50% by mass, even more preferably at a proportion of 2 to 40% by mass, and particularly preferably at a proportion of 3 to 30% by mass. When the amount of the blended hydrophilic organic solvent exceeds 60% by mass, not only can no further promoting effects of aqueous conversion be expected, but in some cases, it tends to cause gelation of the aqueous dispersion, which is not preferable.

Specific examples of the hydrophilic organic solvent include: alcohols such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol; ketones such as methyl ethyl ketone, methyl isobutyl ketone, ethyl butyl ketone, cyclohexanone, and isophorone; ethers such as tetrahydrofuran and dioxane; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, and dimethyl carbonate; a glycol derivative such as ethylene glycol, ethylene glycol monomethyl ether, ethylene glycol monoethyl ether, ethylene glycol monopropyl ether, ethylene glycol monobutyl ether, ethylene glycol ethyl ether acetate, diethylene glycol, diethylene glycol monomethyl ether, diethylene glycol monoethyl ether, diethylene glycol monobutyl ether, diethylene glycol ethyl ether acetate, propylene glycol, propylene glycol monomethyl ether, propylene glycol monobutyl ether, and propylene glycol methyl ether acetate; and furthermore, 3-methoxy-3-methylbutanol, 3-methoxybutanol, acetonitrile, dimethylformamide, dimethylacetamide, diacetone alcohol, and ethyl acetoacetate.

Some of the organic solvent and the basic compound blended in during aqueous conversion can be removed from the aqueous dispersion by a desolvation operation called stripping. By such stripping, the content of the organic solvent can be reduced to 0.1% by mass or less, as necessary. Even when the content of the organic solvent becomes 0.1% by mass or less, no particular influence on the performance of the aqueous dispersion is observed. Examples of the method of stripping include a method in which the aqueous dispersion is heated while stirring at normal pressure or under reduced pressure to distill off the organic solvent. In this case, it is preferable to select a temperature and a pressure such that the basic compound is not completely distilled off. In addition, since a part of the aqueous medium is distilled off at the same time, the solid content concentration in the aqueous dispersion is increased, and therefore, it is preferable to appropriately adjust the solid content concentration.

Examples of the hydrophilic organic solvent on which the desolvation operation is easily performed include ethanol, n-propanol, isopropanol, n-butanol, methyl ethyl ketone, cyclohexanone, tetrahydrofuran, dioxane, ethylene glycol monoethyl ether, ethylene glycol monopropyl ether, and ethylene glycol monobutyl ether. In the present invention, especially ethanol, n-propanol, isopropanol, tetrahydrofuran, and the like are preferably used. The hydrophilic organic solvent on which the desolvation operation is easily performed is preferably used in the present invention because it greatly contributes to the promotion of aqueous conversion of resins in general.

In addition, when obtaining the aqueous dispersion, a hydrocarbon-based organic solvent such as toluene or cyclohexane may be added to an aqueous medium containing a hydrophilic organic solvent in the range of 10% by mass or less relative to the entirety of the components constituting the aqueous medium for the purpose of promoting dispersion of the resin. When the amount of the blended hydrocarbon-based organic solvent exceeds 10% by mass, it may not be possible to obtain a uniform aqueous dispersion due to significant separation from water during the production step.

The aqueous dispersion of the dimer acid-based polyamide can be obtained by the method described above. After heating and stirring each component, the resulting aqueous dispersion may be cooled to room temperature if necessary. Of course, the aqueous dispersion exhibits no aggregation and maintains its stability even after undergoing such a cooling process.

After cooling the aqueous dispersion, there is no problem at all basically in immediately dispensing and subjecting it to the next step. However, since foreign matter or a small amount of undispersed resin may rarely remain in the container, it is preferable to provide a filtration process once before dispensing the aqueous dispersion. As the filtration process, there are no particular limitations, but for example, a means of pressure filtration (for example, air pressure of 0.5 MPa) with a 300 mesh stainless steel filter (wire diameter of 0.035 mm, plain woven) can be employed.

After obtaining the aqueous dispersion of the dimer acid-based polyamide, a coating agent for resin layer formation can be obtained by mixing this aqueous dispersion with fine particles and a dispersion or solution containing a crosslinking agent, if necessary, at appropriate amounts.

Although there are no particular limitations on the method of having the aqueous dispersion of the dimer acid-based polyamide contain fine particles, from the standpoint of dispersibility, a method is preferable in which the fine particles are dispersed in a solvent beforehand using a known disperser or the like, and then mixed with the aqueous dispersion in that state. Examples of the disperser include a blade-type agitator, a high-speed rotating homomixer, a high-pressure homogenizer, and a dissolver. A high-speed rotating homomixer, a high-pressure homogenizer, and a dissolver are preferable, and a high-speed rotating homomixer is particularly preferable.

Also, in the case of dissolving the dimer acid-based polyamide in an aqueous medium to form an aqueous coating agent, for example, the dimer acid-based polyamide is added to a hydrophilic organic solvent such as n-propanol and the resin is once dissolved by heating and stirring at a temperature of 30 to 100°C. Then, to this, water and the aforementioned fine particles are added in appropriate amounts, thereby obtaining a coating agent for resin layer formation.

The coating agent for resin layer formation is preferably an aqueous coating agent as described above, but it may also be one in which the dimer acid-based polyamide, fine particles, and a crosslinking agent are dispersed or dissolved in an organic solvent.

Examples of the organic solvent include: alcohols such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol; ketones such as methyl ethyl ketone, methyl isobutyl ketone, ethyl butyl ketone, cyclohexanone, and isophorone; ethers such as tetrahydrofuran and dioxane; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, and dimethyl carbonate; a glycol derivative such as ethylene glycol, ethylene glycol monomethyl ether, ethylene glycol monoethyl ether, ethylene glycol monopropyl ether, ethylene glycol monobutyl ether, ethylene glycol ethyl ether acetate, diethylene glycol, diethylene glycol monomethyl ether, diethylene glycol monoethyl ether, diethylene glycol monobutyl ether, diethylene glycol ethyl ether acetate, propylene glycol, propylene glycol monomethyl ether, propylene glycol monobutyl ether, and propylene glycol methyl ether acetate; and furthermore, 3-methoxy-3-methylbutanol, 3-methoxybutanol, acetonitrile, dimethylformamide, dimethylacetamide, diacetone alcohol, ethyl acetoacetate, toluene, xylene, and cyclohexane. If necessary, a mixture of these organic solvents may be used.

The content (solid content) of the dimer acid-based polyamide in the coating agent for resin layer formation can be appropriately selected according to the purpose of use or storage method, and is not particularly limited. It is preferably 3 to 40% by mass, and is more preferably 10 to 35% by mass. When the content of the dimer acid-based polyamide in the coating agent for resin layer formation is lower than the range above, it may take longer time to form a coating film by the drying step, and it also tends to become difficult to obtain a thick coating film. On the other hand, when the content of the dimer acid-based polyamide in the coating agent for resin layer formation is higher than the range described above, there is a tendency that the storage stability of the coating agent is likely to be reduced.

The viscosity of the coating agent for resin layer formation is not particularly limited, but it is preferable that the coating agent have a low viscosity even at room temperature. Specifically, the rotational viscosity measured at 20°C using a B-type viscometer (manufactured by Tokimec, Inc., DVL-BII type digital viscometer) is preferably 20000 mPa·s or less, more preferably 5000 mPa·s or less, and even more preferably 500 mPa·s or less. When the viscosity of the coating agent for resin layer formation exceeds 20000 mPa·s, it tends to become difficult to uniformly apply the coating agent to the semi-aromatic polyamide film.

Depending on the application, additive agents such as an antistatic agent, a leveling agent, and an ultraviolet absorber may be blended into the coating agent for resin layer formation. In particular, good dispersion stability is maintained when a basic material is blended as an additive agent.

(Application of Coating Agent for Resin Layer Formation)

In step (b), known methods can be employed as the method for applying the coating agent for resin layer formation to the semi-aromatic polyamide film to form a coating film. For example, the following methods can be employed: gravure roll coating, reverse roll coating, wire bar coating, lip coating, air knife coating, curtain flow coating, spray coating, immersion coating, and brush application. By these methods, the coating agent can be uniformly applied to the surface of the semi-aromatic polyamide film.

(Drying of Coating Film)

After applying the coating agent for resin layer formation to the semi-aromatic polyamide film to form a coating film, the coating film is subjected to a drying heat treatment in step (c), which can remove the aqueous medium, and a semi-aromatic polyamide film having a resin layer made of a dense coating film formed thereon can be obtained.

(Semi-Aromatic Polyamide Film)

In step (a), the aforementioned semi-aromatic polyamide or one blended with an additive agent is melt-extruded with an extruder, the molten polymer is discharged in a sheet shape from a flat die such as a T-die or I-die, and the sheet is brought into contact with the cooling surface of a moving coolant such as a cooling roll or steel belt and cooled, thereby obtaining an unstretched sheet.

At this time, the extrusion temperature is preferably at the melting point (Tm) of the semi-aromatic polyamide or higher and 370°C or lower. When the extrusion temperature is at or lower than the melting point, the viscosity may be increased and extrusion may become impossible. When the extrusion temperature is higher than 370°C, there is a risk that the semi-aromatic polyamide may be decomposed.

The temperature of the moving coolant is preferably 40 to 120°C, more preferably 45 to 90°C, and even more preferably 45 to 60°C. Normally, the crystallization speed of polyamides is so fast that slow cooling causes the crystals to grow and makes stretching difficult. Therefore, the usual practice is to rapidly cool polyamides to near room temperature in order to achieve both enhancement of cooling efficiency and suppression of condensation of water droplets on the moving coolant.

When the temperature of the moving coolant is higher than 120°C, it takes longer time for the molten polymer to develop moderate hardness on the moving coolant, making it difficult for the unstretched sheet to come off the moving coolant. As a result, for example, when the moving coolant is a roll, the unstretched sheet may be broken, causing it to be wrapped around the roll, or even when it is not broken, the momentum of the unstretched sheet as it comes off the roll may cause pulsation to occur. Also, crystals of varying sizes may be produced in the unstretched sheet, resulting in uneven stretching and difficulty in stretching.

In addition, when the semi-aromatic polyamide is rapidly cooled by a moving coolant at lower than 40°C, the portion of the molten polymer that has not yet come into contact with the moving coolant (cooling roll) thereby becomes hard, and that hardened portion does not closely adhere to the moving coolant (cooling roll). As a result, some portions of the unstretched sheet closely adhere to the moving coolant while others do not, and stable operation becomes impossible. In addition, breakage or nonuniform stretching occurs during the subsequent stretching step. This is thought to be caused by, in addition to a resin characteristic of fast crystallization speed, a resin characteristics of a high glass transition temperature (Tg) and a high elastic modulus and hardness in the low temperature region, which prevents uniform, close adhesion to the moving coolant, resulting in localized cooling speed unevenness.

As the method for cooling and solidifying the molten polymer while keeping it in close contact with the moving coolant in order to uniformly cool and solidify the molten polymer to obtain an unstretched sheet, methods such as the air knife casting method, the electrostatic application method, and the vacuum chamber method can be used.

By the method described above, a monolayer film made of one type of layer is obtained. However, a film having a multilayer structure can be produced by methods such as the method described above in which the semi-aromatic polyamide constituting each layer is separately molten and extruded, laminated and fused before solidification, and then biaxially stretched and heat set, or a method in which two or more types of layers are separately molten and extruded to form films and both are then laminated and fused together in the unstretched state or after stretching. For simplicity of the process, it is preferable to use a multilayer die and fuse the layers together before solidification.

The resulting unstretched sheet normally has a thickness of about 10 $\mu$m to 3 mm, and has excellent characteristics such as low water absorbency and chemical resistance even as it is, but by biaxial stretching the sheet to a thickness of about 0.5 $\mu$m to 1.5 mm (step (d)), low water absorbency, chemical resistance, heat resistance, and mechanical strength are further improved.

As the biaxial stretching method, the flat-type sequential biaxial stretching method, the flat-type simultaneous biaxial stretching method, the tubular method, and the like can be used. Among them, the flat-type simultaneous biaxial stretching method is most suitable because of its good film thickness accuracy and uniform physical properties in the width direction of the film.

As the stretching device for the flat-type simultaneous biaxial stretching method, a screw-type tenter, a pantograph-type tenter, a linear motor-driven clip-type tenter, and the like can be used.

The stretching ratio is preferably in the range of 1.5 to 10 times in the longitudinal direction (Machine direction: MD) and the transverse direction (TD), respectively, and is more preferably in the range of 2 to 5 times, in order to obtain excellent heat resistance and mechanical strength of the semi-aromatic polyamide film that is to be finally obtained.

As for the stretching speed, both the stretching strain rates for MD and TD are preferably greater than 400%/min, are more preferably 800 to 12000%/min, and are even more preferably 1200 to 6000%/min. When the strain rate is 400%/min or less, crystals grow during stretching and the film may be broken. On the other hand, when the strain rate is too fast, the unstretched sheet may not be able to follow the deformation and may be broken.

The stretching temperature is preferably at or higher than the Tg of the semi-aromatic polyamide, and is more preferably higher than the Tg and at or lower than (Tg + 50°C). When the stretching temperature is lower than the Tg, breakage of the film is likely to occur and stable production cannot be carried out. On the other hand, when the stretching temperature is higher than (Tg + 50°C), unevenness in stretching may occur.

After the semi-aromatic polyamide film has been stretched as described above, it is preferable to carry out a heat setting treatment, if necessary, while gripping the film with the clips used during the stretching (step (e)). The temperature of the heat setting treatment is preferably 250°C to (Tm - 5°C), and is more preferably 270°C to (Tm - 10°C). When the temperature of the heat setting treatment is lower than 250°C, the resulting film may have reduced dimensional stability during high temperature treatment.

Furthermore, after carrying out the heat setting treatment, it is preferable to carry out a relaxation treatment of 1 to 10%, and is more preferable to carry out a relaxation treatment of 3 to 7%, if necessary, while still gripping the film with the clips. By carrying out the relaxation treatment, sufficient dimensional stability can be obtained in the film.

After carrying out the heat setting treatment or relaxation treatment as desired, the film is cooled and rolled up on a winding roll, thereby obtaining a semi-aromatic polyamide stretched film roll (step (f)). The resulting semi-aromatic polyamide stretched film roll can be slit to the desired width.

It is preferable to carry out lamination of the resin layer on the semi-aromatic polyamide film produced by the method described above by the in-line coating method. That is, it is preferable that the laminated film be produced by performing the steps described above in the order of (a), (b), (c), (d), (e), and (f), in the order of (a), (d), (b), (c), (d), (e), and (f), or in the order of (a), (d), (e), (b), (c), and (f).

In the case of off-line coating, where a film made of semi-aromatic polyamide is rolled up once and then a coating agent for resin layer formation is applied, in order to obtain a film that is excellent in transparency, it is preferable not to add a lubricant to the film made of semi-aromatic polyamide. Therefore, blocking and scratches due to rolling-up are more likely to occur, resulting in reduced quality of the film.

In the method for producing a laminated film of the present invention, the coating agent for resin layer formation is applied to the semi-aromatic polyamide film at an arbitrary stage of the production step using an unstretched film, at an arbitrary stage of the production step using a uniaxially stretched film formed by orienting an unstretched film in either the longitudinal direction or the transverse direction, or at an arbitrary stage of the production step using a biaxially stretched film formed by sequential biaxial stretching or simultaneous biaxial stretching of an unstretched film until it is rolled up with a winding roll. In detail, the laminated film is produced by the following methods: a method in which the coating agent for resin layer formation is applied to the semi-aromatic polyamide film, and then dried as it is to simultaneously carry out the steps of coating film formation treatment, stretching, and heat treatment; a method in which the coating agent is applied to the semi-aromatic polyamide film, and then dried by hot air blowing with a dryer, infrared irradiation, or the like to carry out the steps of coating film formation treatment, stretching, and heat treatment; and a method in which the coating agent is applied after performing the steps of stretching and heat treatment, and then dried by hot air blowing with a dryer, infrared irradiation, or the like to perform a coating film formation treatment.

In the case where the coating agent is applied to form a coating film before biaxial stretching, the resin layer can be applied while the degree of orientational crystallization on the surface of the semi-aromatic polyamide film is small, thus improving the force of close adhesion between the semi-aromatic polyamide film and the resin layer.

On the other hand, in the case where the coating agent is applied after the steps of stretching and heat treatment, the thickness accuracy of the film is made better by stretching, and thus, the application can be performed more precisely compared to the case where the coating agent is applied before stretching, and the risk of cutting or uneven stretching during the stretching step can be further reduced.

In this way, by applying the coating agent for resin layer formation during the production steps of semi-aromatic polyamide film, not only can the production steps be simplified compared to off-line application, but it is also more advantageous in terms of cost due to the thinner film of resin layer.

Furthermore, even when the thickness of the resin layer becomes thinner than the average particle diameter of fine particles contained in the resin layer, the fine particles do not fall out of the resin layer and can contribute to the improvement in slipperiness of the semi-aromatic polyamide film.

<Functional Layer>

In the laminated film of the present invention, the close adhesion between the semi-aromatic polyamide film and the resin layer is high, and it can be used as a single-sided adhesive film for adherence to the adherend or as a double-sided adhesive film for adherence between the adherends, and can be used to produce articles in which the semi-aromatic polyamide film and the adherend are adhered.

A functional layer that is to be laminated as the adherend on the resin layer surface of the laminated film of the present invention is not particularly limited, and examples thereof include functional layers such as a hard coat layer, a conductive layer, a sticky layer, a barrier layer, an antireflection layer, an antiglare layer, a polarizing layer, an antifouling layer, a release layer, an antistatic layer, a hydrophilic layer, a water repellent layer, an oil repellent layer, an ultraviolet absorbing layer, an infrared absorbing layer, a shock absorbing layer, a sealing layer, an insulating layer, a light emitting layer, a printing layer, and an adhesive layer.

The method for providing a functional layer on the resin layer surface of the laminated film of the present invention is not particularly limited, but examples of such methods include: a method of application to the resin layer surface, a method of vapor deposition, a method of extruding a molten product and laminating it together, a method of laminating a functional layer provided on a release film to the laminated film and heat pressing them, and then transferring the functional layer to the laminated film.

(Hard Coat Layer)

As the hard coat layer, known hard coat layers can be used, and it is preferable to laminate a layer mainly constituted from a curable resin having chemical resistance and/or scratch resistance. Examples of the curable resin include an ionizing radiation curable resin, a thermosetting resin, and a thermoplastic resin. The ionizing radiation curable resin is preferable because it is easy to perform a layer formation operation on the semi-aromatic polyamide film provided with the resin layer, and it is easy to increase the surface hardness to the desired value.

Specific examples of the curable resin used to form the hard coat layer include an acrylic resin, a silicone-based resin, a melamine-based resin, an epoxy-based resin, and a urethane-based resin. From the viewpoint of hardness, reduction in interference fringes, and close adhesion between the hard coating layer and the base film, an acrylic resin and a silicone-based resin are preferable, and an acrylic resin is more preferable.

As the acrylic resin, one having acrylate-based functional groups such as acryloyl groups and methacryloyl groups is preferable, and polyester acrylate or urethane acrylate is particularly preferable. The polyester acrylate may be obtained by (meth)acrylating an oligomer of a polyester-based polyol. The urethane acrylate may be obtained by (meth)acrylating a urethane-based oligomer made of a polyol compound and a polyisocyanate compound.

Note that examples of monomers for the (meth)acrylation described above include methyl (meth)acrylate, ethyl (meth)acrylate, butyl (meth)acrylate, 2-ethylhexyl (meth)acrylate, methoxyethyl (meth)acrylate, butoxyethyl (meth)acrylate, and phenyl (meth)acrylate.

As the oligomer of polyester-based polyol constituting the polyester acrylate, mention may be made of the following: a condensation product (for example, polyadipate triol) of an aliphatic dicarboxylic acid such as adipic acid and a glycol (for example, ethylene glycol, polyethylene glycol, propylene glycol, polypropylene glycol, butylene glycol, polybutylene glycol) and/or a triol (for example, glycerin, trimethylolpropane), and a condensation product (for example, polysebacate polyol) of an aliphatic dicarboxylic acid such as sebacic acid and a glycol (specific examples are the same as those described above) and/or a triol (specific examples are the same as those described above). Note that some or all of the aliphatic dicarboxylic acid described above may be replaced with another organic acid. In this case, as another organic acid, isophthalic acid, terephthalic acid, or phthalic anhydride is preferable because it exhibits a high degree of hardness in the hard coating layer.

Examples of the urethane-based oligomer constituting the urethane acrylate include a condensation product of a polyisocyanate compound and a polyol compound.

Specific examples of the polyisocyanate compound may include methylene-bis(p-phenylene diisocyanate), hexamethylene diisocyanate-hexanetriol adduct, hexamethylene diisocyanate, tolylene diisocyanate, tolylene diisocyanate trimethylolpropane adduct, 1,5-naphthylene diisocyanate, thiopropyl diisocyanate, ethylbenzene-2,4-diisocyanate, 2,4-tolylene diisocyanate dimer, hydrogenated xylylene diisocyanate, and tris(4-phenylisocyanate)thiophosphate.

Specific examples of the polyol compound may include a polyether-based polyol such as polyoxytetramethylene glycol, a polyester-based polyol such as polyadipate polyol and polycarbonate polyol, and a copolymer of an acrylic ester and hydroxyethyl methacrylate.

To further enhance the hardness of the hard coat layer, along with the polyester acrylate or urethane acrylate, a multifunctional monomer can be used in combination. Specific examples of the multifunctional monomer include trimethylolpropane tri(meth)acrylate, hexanediol di(meth)acrylate, tripropylene glycol di(meth)acrylate, diethylene glycol di(meth)acrylate, pentaerythritol tri(meth)acrylate, dipentaerythritol hexa(meth)acrylate, 1,6-hexanediol di(meth)acrylate, and neopentyl glycol di(meth)acrylate.

When the ionizing radiation curable resin described above is used as an ultraviolet curable resin, it is preferable to mix in the resin an acetophenone, a benzophenone, benzoyl benzoate groups, an $\alpha$-amyloxime ester, a thioxanthone, or the like as a photopolymerization initiator, and n-butylamine, triethylamine, tri-n-butylphosphine, or the like as a photosensitizer for use.

The urethane acrylate is preferable from the viewpoint that the hard coat layer is highly elastic and flexible, and has excellent processability (foldability). The polyester acrylate is preferable from the viewpoint that a hard coat layer with extremely high hardness can be formed by selecting the constitutional components of the polyester. Therefore, in order to achieve both high hardness and flexibility, two or more types of acrylates may be used.

The acrylic resin is available as a commercial product, and for example, the following can be used: the SEIKABEAM series manufactured by Dainichiseika Color & Chemicals Mfg. Co., Ltd.; the Opstar series manufactured by JSR Corporation; the UV curable hard coat agent SHIKOH series manufactured by The Nippon Synthetic Chemical Industry Co., Ltd.; the UV curable hard coat agents HR320 series, HR330 series, HR350 series, and HR360 series manufactured by The Yokohama Rubber Co., Ltd.; the UV curable functional hard coat agent LIODURAS-LCH series and the like manufactured by TOYO INK CO., LTD.; and the UV coat agent AICAAITRON series and the like manufactured by Aica Kogyo Co., Ltd. The acrylic resin may be used singly, or may be used in a mixture of multiples.

The silicone-based resin may be one in which acrylic groups are bonded onto a silicone resin via covalent bonds, or it may be one including a condensation product having silanol groups obtained by subjecting an alkoxysilane to hydrolysis polycondensation. In particular, in the latter case, the silanol groups are converted into siloxane bonds by thermal curing or the like after application, and a hard coating layer is obtained as the cured film.

The silicone-based resin is available as a commercial product, and for example, the following can be used: the UV curable silicone hard coat agent X-12 series manufactured by Shin-Etsu Chemical Co., Ltd.; the UV curable silicone hard coat agent UVHC series and the thermosetting silicone hard coat agent SHC series manufactured by Momentive Performance Materials Japan, Inc.; and the UV curable functional hard coat agent LIPDIRAS-S Series and the like manufactured by TOYO INK CO., LTD. The silicone-based resin may be used singly, or may be used in a mixture of multiples.

The pencil hardness of the hard coat layer may be various hardnesses depending on applications, and it is preferably HB or higher, more preferably H or higher, and even more preferably 2H or higher. By having the hard coat layer, the base film has improved scratch resistance. By selecting the thickness, materials, and curing conditions for the hard coat layer, the hardness can be controlled.

Although the thickness of the hard coat layer is not particularly limited, it is preferable to adjust it within a range that does not impair optical characteristics, and it is preferably in the range of 1 to 15 μm, and is more preferably 2 to 5 μm. When the thickness is less than 1 μm, sufficient surface hardness may not be obtained, and when the thickness is 15 μm or more, not only may the laminated film be curled, but it is also not preferable from an economic viewpoint.

Hard coat films are required to have excellent transparency in a variety of applications, including large displays such as TVs and small displays such as cell phones, PCs, and smart phones. Normally, the transparency of a film is expressed in terms of haze and total light transmittance. The hard coat film, in which the hard coat layer described above is laminated on the laminated film of the present invention, preferably has a haze of 3.0% or less, more preferably 2.0% or less, and even more preferably 1.5% or less, and it preferably has a total light transmittance of 80% or more, more preferably 85%, and even more preferably 90% or more.

As the method for forming the hard coat layer, mention may be made of a method in which a coating liquid for hard coat layer formation is applied onto the resin layer laminated on the semi-aromatic polyamide film and cured.

The coating liquid for hard coat layer formation normally contains the aforementioned curable resin, and it may contain additive agents such as an ultraviolet absorber, a leveling agent, a defoaming agent, and an antioxidant, if desired. As the coating liquid for hard coat layer formation, monomers or oligomers for forming the aforementioned curable resin dissolved in a solvent or dispersed in water may be used, or liquid monomers or oligomers may be used as they are.

Examples of the organic solvent in which monomers and/or oligomers for forming the curable resin are to be dissolved include: alcohols such as methanol, ethanol, n-propanol, isopropanol, n-butanol, isobutanol, sec-butanol, tert-butanol, n-amyl alcohol, isoamyl alcohol, sec-amyl alcohol, tert-amyl alcohol, 1-ethyl-1-propanol, 2-methyl-1-butanol, n-hexanol, and cyclohexanol; ketones such as methyl ethyl ketone, methyl isobutyl ketone, ethyl butyl ketone, cyclohexanone, and isophorone; ethers such as tetrahydrofuran and dioxane; esters such as ethyl acetate, n-propyl acetate, isopropyl acetate, n-butyl acetate, isobutyl acetate, sec-butyl acetate, 3-methoxybutyl acetate, methyl propionate, ethyl propionate, diethyl carbonate, and dimethyl carbonate; a glycol derivative such as ethylene glycol, ethylene glycol monomethyl ether, ethylene glycol monoethyl ether, ethylene glycol monopropyl ether, ethylene glycol monobutyl ether, ethylene glycol ethyl ether acetate, diethylene glycol, diethylene glycol monomethyl ether, diethylene glycol monoethyl ether, diethylene glycol monobutyl ether, diethylene glycol ethyl ether acetate, propylene glycol, propylene glycol monomethyl ether, propylene glycol monobutyl ether, and propylene glycol methyl ether acetate; and furthermore, 3-methoxy-3-methylbutanol, 3-methoxybutanol, acetonitrile, dimethylformamide, dimethylacetamide, diacetone alcohol, ethyl acetoacetate, toluene, xylene, and cyclohexane. If necessary, a mixture of these organic solvents may be used.

As the method for applying the coating liquid for hard coat layer formation to the resin layer, known methods can be employed. For example, the following methods can be employed: gravure roll coating, reverse roll coating, wire bar coating, lip coating, air knife coating, curtain flow coating, spray coating, immersion coating, and brush application. By these methods, the coating liquid can be uniformly applied to the surface of the resin layer.

After applying the coating liquid for hard coat layer formation to the resin layer, a method of irradiating it with ionizing radiation such as ultraviolet light, a method of heating it, or the like can be employed depending on the type of curable resin, thereby sufficiently curing the coating liquid, and a hard coat layer can be formed on the resin layer laminated on the semi-aromatic polyamide film.

(Conductive Layer)

As the conductive layer, those known can be used, and it is preferable to laminate a layer mainly constituted from a material including a conductive material such as a conductive fibrous filler, a conductive metal oxide, and a conductive polymer.

It is preferable that the conductive fibrous filler be at least one type selected from, for example, a conductive carbon fiber, a metallic fiber, and a metal-coated synthetic fiber.

Examples of the conductive carbon fiber include a vapor grown carbon fiber (VGCF), a carbon nanotube, a wire cup, and a wire wall. Two or more types of these conductive carbon fibers may be used.

As the metallic fiber, for example, fibers made by the drawing method, which stretches stainless steel, iron, gold, silver, copper, aluminum, nickel, titanium, and the like into a thin and long form, or by the cutting method can be used. Such metallic fibers may be used in two or more types, and alloyed ones may be used. Among these metallic fibers, metallic fibers using silver are preferable because of their excellent conductivity.

Examples of the metal-coated synthetic fiber include a fiber formed by coating an acrylic fiber with gold, silver, aluminum, nickel, titanium, or the like. Such metal-coated synthetic fibers may be used in two or more types. Among these metal-coated synthetic fibers, metal-coated synthetic fibers using silver are preferable because of their excellent conductivity.

The content of the conductive fibrous filler in the conductive layer is, for example, preferably 20 to 3000 parts by mass relative to 100 parts by mass of the resin component constituting the conductive layer, and more preferably 50 to 1000 parts by mass. When the content is less than 20 parts by mass, it may not be possible to form a conductive layer having sufficient conductive performance. In addition, the amount of binder resin entering the contact points of the conductive fibrous filler may be increased, which may reduce conduction in the conductive layer and prevent sufficient conductivity from being obtained. When the content exceeds 3000 parts by mass, the haze of the laminated body may become high or the light transmittance performance may become insufficient.

The components of the conductive polymer are not particularly limited, and conventionally known materials can be used, and for example, the following high molecular weight conductive agents can also be used: an aromatic conjugated poly(para-phenylene); a heterocyclic conjugated polypyrrole; a polythiophene; an aliphatic conjugated polyacetylene; a heteroatom-containing conjugated polyaniline; a mixed conjugated poly(phenylenevinylene); a multi-chain conjugated system, which is a conjugated system with multiple conjugated chains in the molecule; and a conductive composite that is a polymer in which the aforementioned conjugated polymer chains are grafted or block copolymerized onto a saturated polymer.

The conductive metal oxide is not particularly limited, and conventionally known materials can be used. Examples thereof may include $ZnO$, $CeO_2$, $Sb_2O_3$, $SnO_2$, indium tin oxide (abbreviation: ITO), $In_2O_3$, $Al_2O_3$, antimony doped tin oxide (abbreviation: ATO), and aluminum doped zinc oxide (abbreviation: AZO). It is preferable that the average particle diameter of the conductive metal oxide be 0.1 nm to 0.1 $\mu$m. When the average particle diameter is within such a range, it is possible to obtain a composition that can form a highly transparent film with almost no haze and good total light transmittance when the conductive fine particles described above are dispersed in the raw materials for the resin component constituting the conductive layer. The content of the conductive fine particles is preferably 10 to 400 parts by mass relative to 100 parts by mass of the resin component constituting the conductive layer described above. When the content is less than 10 parts by mass, it may not be possible to form a conductive layer having sufficient conductive performance, and when the content exceeds 400 parts by mass, the haze of the laminated body may become high or the light transmittance performance may become insufficient.

Also, conductive agents other than the conductive materials described above may be used, and examples thereof include: quaternary ammonium salts; pyridinium salts; a variety of cationic compounds having cationic groups such as primary to tertiary amino groups; anionic compounds having anionic groups such as conjugate base of sulfonic acid, conjugate base of sulfuric acid ester, conjugate base of phosphoric acid ester, or conjugate base of phosphonic acid; amino acid-based, amino sulfuric acid ester-based, or other amphoteric compounds; aminoalcohol-based, glycerin-based, polyethylene glycol-based, or other nonionic compounds; organometallic compounds such as alkoxides of tin and titanium, and metal chelate compounds such as their acetylacetonate salts; compounds obtained by making the compounds listed above have high molecular weights; and polymerizable compounds such as monomers or oligomers that have tertiary amino groups, quaternary ammonium groups, or metal chelate moieties and can be polymerized by ionizing radiation, or organometallic compounds that have polymerizable functional groups that can be polymerized by ionizing radiation and are like coupling agents.

Examples of the method for forming the conductive layer include a method in which the conductive layer is laminated by a normal coating method; a method in which an overcoat layer is further laminated on top of the conductive layer at a level that provides the desired resistance value; a method having a transfer step in which a transfer film having at least the conductive layer described above on a release film is used to transfer the conductive layer described above onto the resin layer, which is the transfer object; physical vapor deposition (PVD); chemical vapor deposition (CVD); and sputtering.

(Sticky Layer)

As the sticker constituting the sticky layer, it is possible to use known stickers including those with excellent transparency called OCAs (Optical Clear Adhesives), which are normally used when laminating members for displays, and examples thereof include an acrylic sticker, a rubber-based sticker, a silicone-based sticker, and a urethane-based sticker. From the viewpoint of heat resistance, transparency, and stability, the acrylic sticker is preferable. As the components used in the acrylic sticker, those known can be used, and examples thereof include 2-ethylhexyl acrylate, butyl acrylate, methyl methacrylate, ethyl acrylate, methyl acrylate, benzyl acrylate, phenoxyethyl acrylate, vinyl acetate, acrylic acid, hydroxyethyl methacrylate, hydroxyethyl acrylate, glycidyl methacrylate, and acetoacetoxyethyl methacrylate. Such components may be copolymerized or mixed for use in accordance with the desired tack or heat characteristics.

To the sticker described above, additive agents such as a crosslinking agent, a tackifier, a filler, a surfactant, a pigment, an antioxidant, a flame retardant, and a silane coupling agent may be blended.

From the viewpoint of improvement in cohesive strength, improvement in heat resistance, and the like, it is preferable to use the crosslinking agent, and conventionally known crosslinking agents can be used. Examples thereof include an isocyanate compound, an epoxy compound, a metal chelate-based compound, and a melamine compound.

The tackifier is for the purpose of improving adhesiveness, and conventionally known tackifiers can be used. Examples thereof include rosins, terpenes, a petroleum resin, a coumarone resin, and an indene resin.

(Barrier Layer)

The materials constituting the barrier layer may be any material as long as it is used as a barrier film, and examples thereof include a silicon oxide film ($SiO_X$), a silicon nitride film ($SiN_X$), a silicon oxynitride film ($SiO_XN_Y$), a silicon carbide film (SiC), a silicon carbonitride film ($SiC_XN_Y$), an aluminum oxide film ($AlO_X$), an aluminum nitride film ($AlN_X$), an aluminum oxynitride film ($AlO_XN_Y$), a titanium oxide film ($TiO_X$), a titanium oxynitride film ($TiO_XN_Y$), ITO, and a polysilazane. The barrier layer may be monolayer or multilayer.

As the method for forming the barrier layer on the resin layer surface, conventionally known methods can be used, and examples thereof include methods such as coating, physical vapor deposition (PVD), chemical vapor deposition (CVD), and sputtering.

In order to protect the barrier layer, a protective layer may be further laminated.

(Antireflection Layer)

As the materials constituting the antireflection layer, conventionally known materials can be used, and examples thereof include an inorganic particle such as silica and an organic particle such as styrene and acrylic ones. In addition to them, other components such as a binder may also be contained.

(Release Layer)

As the release agent constituting the release layer, conventionally known materials can be used, and examples thereof include a silicone resin, a fluororesin, a long-chain alkyl polymer, a wax, and an olefin resin. The release layer may contain additive agents such as a peel force modifier and an oil.

(Antistatic Layer)

As the materials constituting the antistatic layer, conventionally known materials can be used, and the same materials as those for the aforementioned conductive layer can be used. Examples thereof include: a conductive metal oxide such as tin oxide, indium oxide, or zinc oxide; a polyaniline-based, polypyrrole-based, or polythiophene-based conductive polymer; a conductive carbon such as carbon black or ketjen black; a metal such as silver, copper, or aluminum; and a surfactant. In addition to the above, a resin component or the like may be contained as a binder.

(Hydrophilic Layer, Water Repellent Layer, and Oil Repellent Layer)

As the materials constituting the hydrophilic layer, conventionally known materials can be used, and examples thereof include one using a hydrophilic polymer such as polyvinyl alcohol, polyethylene glycol, or a polymer formed by adding hydrophilic functional groups to acrylic polymer, a surfactant, and an inorganic material such as silica.

As the materials constituting the water repellent layer and the oil repellent layer, conventionally known materials can be used, and examples thereof include a fluororesin, a wax, and a silicone.

(Ultraviolet Absorbing Layer and Infrared Absorbing Layer)

As the materials constituting the ultraviolet absorbing layer, conventionally known materials can be used, and examples thereof include a benzophenone-based, benzotriazole-based, triazine-based, cyanoacrylate-based, oxanilide-based, salicylate-based, or formamidine-based organic ultraviolet absorber. In addition to the above, an ultraviolet reflection agent such as titanium oxide or zinc oxide, or a hindered amine-based radical scavenger may also be added.

As the materials constituting the infrared absorbing layer, conventionally known materials can be used, and examples thereof include lanthanum hexaboride, cesium tungsten oxide, a cyanine dye, a phthalocyanine dye, a naphthalocyanine compound, a nickel dithiolene complex, a squalium dye, a quinone-based compound, a diimmonium compound, and an azo compound.

(Antiglare Layer)

As the materials constituting the antiglare layer, conventionally known materials can be used, and it is generally a mixture of a filler such as organic particles or inorganic particles, and a binder such as a thermoplastic resin or a thermosetting resin.

Examples of the organic particles include polystyrene beads, melamine resin beads, acrylic beads, acrylic-styrene beads, silicone beads, benzoguanamine beads, benzoguanamine-formaldehyde condensate beads, polycarbonate beads, and polyethylene beads.

Examples of the inorganic particles include inorganic oxide fine particles such as silica ($SiO_2$) fine particles, alumina fine particles, titania fine particles, tin oxide fine particles, antimony doped tin oxide (ATO) fine particles, zinc oxide fine particles.

Examples of the thermoplastic resin include a styrene-based resin, a (meth)acrylic resin, a vinyl acetate-based resin, a vinyl ether-based resin, a halogen-containing resin, an alicyclic olefin-based resin, a polycarbonate-based resin, a polyester-based resin, a polyamide-based resin, a cellulose derivative, a silicone-based resin, and a rubber or elastomer.

Examples of the thermosetting resin include a phenolic resin, a urea resin, a diallyl phthalate resin, a melamine resin, a guanamine resin, an unsaturated polyester resin, a polyurethane resin, an epoxy resin, an amino alkyd resin, a melamine-urea co-condensed resin, a silicon resin, and a polysiloxane resin.

(Polarizing Layer)

As the materials constituting the polarizing layer, conventionally known materials can be used, and examples thereof include a polyvinyl alcohol, a partially formalated polyvinyl alcohol, and an ethylene-vinyl acetate copolymer, as well as a dyed or dehydrated product thereof, and a dehydrochlorinated product of polyvinyl chloride.

(Insulating Layer)

As the insulating layer, conventionally known materials can be used, and examples thereof include: an inorganic material such as mica, ceramic, and glass; a thermoplastic resin such as polyester, polyamide, shellac, rosin, polyethylene, polypropylene, polyvinyl chloride, polystyrene, and polyester; a thermosetting resin such as phenol, melamine, epoxy, and silicone; and a rubber-based material such as natural rubber, butyl rubber, ethylenepropylene rubber, and silicone rubber.

(Light Emitting Layer)

As the materials constituting the light emitting layer, conventionally known materials can be used, and examples thereof include: a dyeing material such as a cyclopentamine derivative, a tetraphenylbutadiene derivative, a triphenylamine derivative, an oxadiazole derivative, a pyrazoloquinoline derivative, a distyrylbenzene derivative, a distyrylarylene derivative, a silole derivative, a thiophene ring compound, a pyridine ring compound, a perinone derivative, a perylene derivative, an oligothiophene derivative, a trifumanylamine derivative, an oxadiazole dimer, and a pyrazoline dimer; a metal complex-based material such as a metal complex that has Al, Zn, Be, or the like, or a rare earth metal such as Tb, Eu, or Dy as the central metal, and has an oxadiazole, thiadiazole, phenylpyridine, phenylbenzimidazole, or quinoline structure as the ligand, including an aluminum quinolinol complex, a benzoquinolinol beryllium complex, a benzoxazole zinc complex, a benzothiazole zinc complex, an azomethyl zinc complex, a porphyrin zinc complex, and a europium complex; and a polymeric material such as a poly(p-phenylene vinylene) derivative, a polythiophene derivative, a poly(p-phenylene) derivative, a polysilane derivative, a polyacetylene derivative, a polyfluorene derivative, a polyvinylcarbazole derivative, and one formed by making the dyeing material and metal complex-based light emitting material described above into a polymer.

In addition to the light emitting materials described above, the following doping materials may be added for the purpose of improving the luminous efficiency in the light emitting layer, changing the emission wavelength, and the like: a perylene derivative, a coumarin derivative, a rubrene derivative, a quinacridone derivative, a squarylium derivative, a porphyrene derivative, a styryl-based dye, a tetracene derivative, a pyrazoline derivative, decacyclene, and phenoxazone. Furthermore, a surfactant or the like may be added for the purpose of improving printability.

(Adhesive Layer)

As the materials constituting the adhesive layer, conventionally known materials can be used, and examples thereof include vinyl acetate, a vinyl acetate-vinyl chloride copolymer, a polyvinyl butyral, a polyolefin, a polyamide, a natural rubber, a synthetic rubber, a silicone rubber, a polyurethane, a polyester, a phenolic resin, an epoxy resin, a polyimide resin, an acrylate resin, and a cyanoacrylate.

(Printing Layer)

As the materials constituting the printing layer, conventionally known materials can be used. For example, it is a layer having a colored pigment and/or dye and a binder (also called a vehicle), and a stabilizer, a light stabilizer, a curing agent, a crosslinking agent, a plasticizer, an antioxidant, an ultraviolet absorber, a particle, an antistatic agent, a filler, or another additive agent may be appropriately added, if necessary. Examples of the binder include a rosin, a rosin ester, a rosin-modified resin, a shellac, an alkyd resin, a phenolic resin, a polyacetic acid-based resin, a polystyrene-based resin, a polyvinyl butyral resin, an acrylic or methacrylic resin, a polyamide-based resin, a polyester-based resin, a polyurethane-based resin, an epoxy-based resin, a urea resin, a melamine resin, an amino alkyd resin, gun cotton, nitrocellulose, ethyl cellulose, a chlorinated rubber, a cyclized rubber, a flax oil, a tung oil, a soybean oil, and a hydrocarbon oil.

<Use of Laminated Film>

The laminated film of the present invention is excellent in adhesiveness with a variety of functional layers, transparency, optical characteristics, and folding resistance, and therefore can be used in various applications. In particular, because the laminated film has the characteristics described above, it can be used particularly usefully in a flexible display application using organic EL.
When a hard coat layer is formed on the laminated film, it can be used as a cover film for the surface layer of flexible displays. When a conductive layer is formed, it can be used as a sensor film for touch panels. When a barrier layer is formed, it can be used as a barrier film for protecting organic EL elements. It can also be used as a base film for laminating the light emitting layer of organic EL.
In addition, since the laminated film of the present invention is pliable and has excellent flexibility, it can also be used as a shock absorbing layer in displays of smart phones and the like for mitigating shocks from drops and the like.
In addition to the display application mentioned above, the laminated film of the present invention can be developed for various other applications, and it can be suitably used as a film or the like for household and industrial materials, such as: a flexible printed circuit board; a sensor component; a pharmaceutical packaging material; a food packaging material for retort pouch foods and the like; an electronic component packaging material for semiconductor packages and the like; an electrical insulating material for motors, transformers, cables, and the like; an inductor material for the capacitor application and the like; a material for magnetic tapes such as cassette tapes, magnetic tapes for storing data for digital data storage, and video tapes; a solar cell substrate; a liquid crystal plate; a conductive film; an organic LED; a film for mounting on sensors; a protective plate for display devices and the like; an LED mounting substrate; a flexible printed wiring board; an electronic substrate material such as a flexible flat cable; a coverlay film for flexible printed wiring; a tape for heat resistant masking; a heat resistant sticky tape such as an industrial tape; a heat resistant barcode label; a heat resistant reflector; a variety of release films; a heat resistant sticky base film; a photographic film; a molding material; an agricultural material; a medical material; a material for civil engineering and construction; and a filtration membrane.

Examples

Hereinafter, the present invention will be specifically described with reference to Examples.
The evaluation methods for a variety of physical properties in the following Examples and Comparative Examples were as follows. Unless otherwise noted, all measurements were carried out under an environment with a temperature of 23°C and a humidity of 50%.

<Evaluation Methods>

(1) Characteristics of Semi-Aromatic Polyamide

[Limiting Viscosity [η]]

At 30°C in concentrated sulfuric acid, the inherent viscosity (ηinh) of a sample at each concentration of 0.05, 0.1, 0.2, or 0.4 g/dl was determined from the following expression, and the value obtained by extrapolating this to a concentration of 0 was defined as the limiting viscosity [η].

$$\eta\mathrm{inh} = [\ln(t1/t0)]/c$$

[In the expression, ηinh represents the inherent viscosity (dl/g), t0 represents the flow time of the solvent (sec), t1 represents the flow time of the sample solution (sec), and c represents the concentration of the sample in the solution (g/dl)].

[Melting Point (Tm) and Glass Transition Temperature (Tg)]

Using a DSC device (DSC7 manufactured by PerkinElmer, Inc.), the temperature of a semi-aromatic polyamide was increased from 20°C to 350°C at 10°C/min under a nitrogen atmosphere and held for 5 minutes (1st Scan), then cooled from 350°C to 20°C at 100°C/min and held for 5 minutes. Furthermore, the temperature was increased again from 20°C to 350°C at 10°C/min (2nd Scan), and the glass transition temperature during this process was defined as the Tg of the semi-aromatic polyamide. Similarly, the peak top temperature of the crystal melting peak observed in the 2nd Scan was defined as the Tm.

(2) Characteristics of Dimer Acid-based Polyamide

[Acid Value and Amine Value]

The acid value and the amine value were measured by the methods described in JIS K2501.

[Softening Point Temperature]

Using 10 mg of resin as the sample, the measurement was carried out under conditions with a temperature rising rate of 20°C/min, using a microscope equipped with a heating (cooling) device heat stage for microscopes (manufactured by Linkam Scientific Instruments Ltd., Heating-Freezing ATAGE TH-600 model), and the temperature at which the resin begins to be deformed was defined as the softening point.

(3) Characteristics of Dimer Acid-based Polyamide Resin Aqueous Dispersion

[Solid Content Concentration]

The obtained aqueous dispersion was weighed in an appropriate amount and this was heated at 150°C until the mass of the remaining material (solid content) reached a constant amount, thereby determining the solid content concentration.

[Viscosity]

By using a B-type viscometer (manufactured by Tokimec, Inc., DVL-BII type digital viscometer), the rotational viscosity (mPa·s) at a temperature of 25°C was measured.

(4) Characteristics of Laminated Film

[Thickness]

The obtained laminated film was left in an environment of 23°C and 50% RH for 2 hours or longer, and then observation of the film cross-section was carried out with a transmission electron microscope (TEM), and the thickness of each layer was measured. Note that, when the resin layer contains fine particles whose average particle diameter is larger than the thickness of the resin layer, the thickness of the resin layer in the area where the fine particles do not exist was measured.

[Close Adhesion]

For the resin layers of the laminated films produced in Examples, the close adhesion of the base film/resin layer was evaluated by the cross-cut method, in accordance with the method described in JIS K 5600.

In detail, the laminated film, on which humidity control had been sufficiently carried out in an environment of 23°C and 50% RH, was cross-cut from the resin layer side to create a lattice pattern of 100 sections, and then a sticky tape (manufactured by Nichiban Co., Ltd., TF-12) was pasted to the resin layer side and the tape was vigorously peeled off. The close adhesion of the base film/resin layer was evaluated from the percentage of the resin layer lattice remaining on the base material.

[Haze and Total Light Transmittance]

Using a haze meter (NDH 2000) manufactured by Nippon Denshoku Industries Co., Ltd., measurements of the total light transmittance (Tt) and the diffuse transmittance (Td) of the laminated film were carried out in accordance with JIS K7105, and the haze was calculated based on the following expression.

$$\text{Haze (\%)} = (Td/Tt) \times 100$$

[Flex Resistance]

The laminated films obtained in Examples were cut into rectangular shapes of 30 × 100 mm to make samples. The samples were fixed on a durability testing machine (DLDMLH-FS manufactured by Yuasa System Co., Ltd.) with each short side of the samples attached such that the minimum distance between the two opposing sides was 1.5 mm. The samples were subjected to a flexion test in which the surface side of the samples was folded by 180 degrees (the resin layer was inside) up to 100000 times, and it was visually checked whether cracks, fold marks, bleaching, breakage, or the like occurred in the flexed part. After every 10000 times of folding, the samples were visually checked, and the flexion test was continued for the samples where no change was observed in the flexed part or the samples where change was observed in the flexed part but the level of change was not a problem in practical use. For those with apparent cracks, fold marks, bleaching, breakage, or the like occurring at the flexed part, the test was discontinued. After 100000 times of folding, the flex resistance was evaluated by the following criteria.

Excellent: There were no cracks or breakage in the flexed part, and no fold marks or bleaching occurred.
Good: There were no cracks or breakage in the flexed part, and no bleaching occurred although fold marks remained.
Fair: There were no cracks or breakage in the flexed part, but fold marks remained and bleaching occurred.
Poor: Cracks or breakage occurred in the flexed part.

[Dynamic Friction Coefficient]

In accordance with JIS K7125, the dynamic friction coefficient between the resin layers of the laminated film was measured.

[Thermal Shrinkage Factor]

The laminated film was cut into strips of 10 mm width × 150 mm, and two marked lines were made on the strips with an interval of 100 mm to make test pieces. The obtained test pieces were subjected to a heat treatment in an oven at 250°C for 5 minutes under no load, and then the test pieces were taken out and humidity control was performed for 2 hours at 23°C × 50% RH, after which the distance between the marked lines was measured. The thermal shrinkage factor was determined using the following expression for each of the three samples for measurement in the longitudinal direction (MD) and the transverse direction (TD) of the film, and the average value of the thermal shrinkage factor in each direction was calculated.

$$\text{Thermal Shrinkage Factor (\%)} = (A - B)/A \times 100$$

A: Distance between marked lines before heat treatment (mm), and B: Distance between marked lines after heat treatment (mm)

[Blocking Resistance]

The laminated film was unwound from a film roll of laminated film and the blocking resistance was evaluated.
Excellent: The laminated film can be unwound without any resistance.

Good: When unwinding, the sound of the films peeled off from each other is heard, but the appearance of the film after unwinding is transparent with no bleaching.
Fair: When unwinding, the sound of the films peeled off from each other is heard, and bleaching of the coating film is observed after unwinding.
Poor: Strong resistance occurs when unwinding, and in the film after unwinding, bleaching of the coating film is observed.

(5) Characteristics of Laminated Film Having Hard Coat Layer Formed Thereon

[Formation of Hard Coat Layer]

On the resin layer of the laminated film, an acrylic hard coat resin (SEIKABEAM PHC manufactured by Dainichiseika Color & Chemicals Mfg. Co., Ltd.) was applied using a desktop coating device (manufactured by Yasuda Seiki Seisakusho, Ltd., Film Applicator No. 542-AB type, equipped with a bar coater), and curing was carried out with a low pressure mercury lamp UV cure device (manufactured by Toshiba Lighting & Technology Corporation, 40 mW/cm, single lamp type) to form a hard coat layer with a thickness of 3 $\mu$m.

[Adhesiveness]

The adhesiveness between the hard coat layer and the resin layer was evaluated by the cross-cut method in an environment of 23°C and 50% RH in accordance with the method described in JIS K5600. In detail, a sticky tape (manufactured by Nichiban Co., Ltd., TF-12) was applied to the hard coat layer, which had been cut to create a lattice pattern of 100 sections, and the tape was vigorously peeled off. From the number of remaining lattices, the adhesiveness to the hard coat layer was evaluated in the following four stages.

Excellent: 100
Good: 99 to 95
Fair: 94 to 50
Poor: 49 to 0

[Haze and Total Light Transmittance]

By the same method as the evaluation method for the haze and the total light transmittance of the laminated film, the haze and the total light transmittance of the laminated film having the hard coat layer formed thereon were determined.

[Dynamic Friction Coefficient]

In accordance with JIS K7125, the dynamic friction coefficient between the base film and the hard coat layer was measured when the laminated film has the resin layer laminated on one surface of the base film, and the dynamic friction coefficient between the resin layer and the hard coat layer was measured when the laminated film has the resin layer laminated on both surfaces of the base film. In the present invention, the dynamic friction coefficient is preferably 0.7 or less.

[Interference Fringe]

The laminated film on which the hard coat layer had been laminated was cut out into an area of 10 cm × 15 cm, and a black glossy tape (Vinyl Tape No. 200-5 Black manufactured by Yamato Co., Ltd.) was pasted to the side opposite to the side on which the hard coat layer had been laminated. With the hard coat layer facing upward, the reflected light was visually observed from diagonally upward at 30 to 60° using a three band neutral white fluorescent lamp (Palook F.L15EX-N15W manufactured by Panasonic Corporation) as the light source, and interference fringes were evaluated according to the following criteria.

Good: Good appearance with no or only slightly visible interference fringes.
Fair: Interference fringes can be seen, but the appearance is at a practical level.
Poor: Interference fringes are very conspicuous and the appearance is poor.

[Pencil Hardness]

For the laminated film having a hard coat layer laminated thereon, the pencil hardness was measured (1 kg load) in accordance with JIS K5600-5-4 (1999). For practical use, it is preferable that the pencil hardness be HB or higher.

<Raw Materials>

The following resin aqueous dispersions were used to prepare coating agents for resin layer formation.

[Dimer Acid-based Polyamide Resin Aqueous Dispersion E-1]

As a dimer acid-based polyamide P-1, used was a polyamide resin containing 100 mol% of a dimer acid as the dicarboxylic acid component and 100 mol% of ethylenediamine as the diamine component, and having an acid value of 10.0 mg KOH/g, an amine value of 0.1 mg KOH/g, and a softening point of 158°C.
In a sealable, pressure resistant glass container (capacity: 1 liter) equipped with a stirrer and a heater, 75.0 g of the dimer acid-based polyamide P-1, 37.5 g of isopropanol (IPA), 37.5 g of tetrahydrofuran (THF), 7.2 g of N,N-dimethylethanolamine, and 217.8 g of distilled water were charged. While stirring at a rotation speed of 300 rpm, the system was heated inside, and heating and stirring were carried out at 120°C for 60 minutes. Thereafter, the mixture was cooled to near room temperature (about 30°C) with stirring, and after adding 100 g of distilled water, it was filtered through a 300 mesh stainless steel filter (wire diameter of 0.035 mm, plain woven) while very slightly pressurized. The obtained aqueous dispersion was placed in a 1 L eggplant flask and decompressed using an evaporator while being kept in a hot water bath heated to 80°C to remove about 100 g of the mixed media of IPA, THF, and water, thereby obtaining a milky white, uniform dimer acid-based polyamide resin aqueous dispersion E-1. The solid content concentration of E-1 was 20% by mass, the number average particle diameter of the resin in the dispersion was 0.040 $\mu$m, the pH was 10.4, and the viscosity was 36 mPa·s.

[Dimer Acid-based Polyamide Resin Aqueous Dispersion E-2]

As a dimer acid-based polyamide P-2, used was a polyamide resin containing 85 mol% of a dimer acid and 15 mol% of azelaic acid as the dicarboxylic acid component and 50 mol% of piperazine and 50 mol% of ethylenediamine as the diamine component, and having an acid value of 15.0 mg KOH/g, an amine value of 0.3 mg KOH/g, and a softening point of 110°C.
In a sealable, pressure resistant glass container (capacity: 1 liter) equipped with a stirrer and a heater, 75.0 g of the dimer acid-based polyamide P-2, 93.8 g of IPA, 6.0 g of N,N-dimethylethanolamine, and 200.3 g of distilled water were charged. While stirring at a rotation speed of 300 rpm, the system was heated inside, and heating and stirring were carried out at 120°C for 60 minutes. Thereafter, the mixture was cooled to near room temperature (about 30°C) with stirring, and after adding 130 g of distilled water, it was filtered through a 300 mesh stainless steel filter (wire diameter of 0.035 mm, plain woven) while very slightly pressurized. The obtained aqueous dispersion was placed in a 1 L eggplant flask and decompressed using an evaporator while being kept in a hot water bath heated to 80°C to remove about 130 g of the mixed media of IPA and water, thereby obtaining a milky white, uniform dimer acid-based polyamide resin aqueous dispersion E-2. The solid content concentration of E-2 was 20% by mass, the number average particle diameter of the resin in the dispersion was 0.052 $\mu$m, the pH was 10.6, and the viscosity was 30 mPa·s.

[Dimer Acid-based Polyamide Resin Aqueous Dispersion E-3]

As a dimer acid-based polyamide P-3, used was a polyamide resin containing 60 mol% of a dimer acid and 40 mol% of azelaic acid as the dicarboxylic acid component and 50 mol% of piperazine and 50 mol% of ethylenediamine as the diamine component, and having an acid value of 10.5 mg KOH/g, an amine value of 0.1 mg KOH/g, and a softening point of 165°C.
In a sealable, pressure resistant glass container (capacity: 1 liter) equipped with a stirrer and a heater, 110.0 g of the dimer acid-based polyamide P-3, 110.0 g of IPA, 110.0 g of THF, 9.2 g of N,N-dimethylethanolamine, 11.0 g of toluene, and 199.8 g of distilled water were charged. While stirring at a rotation speed of 300 rpm, the system was heated inside, and heating and stirring were carried out at 120°C for 60 minutes. Thereafter, the mixture was cooled to near room temperature (about 30°C) with stirring, and after adding 330 g of distilled water, it was filtered through a 300 mesh stainless steel filter (wire diameter of 0.035 mm, plain woven) while very slightly pressurized. The obtained aqueous dispersion was placed in a 1 L eggplant flask and decompressed using an evaporator while being kept in a hot water bath heated to 80°C to remove about 330 g of the mixed media of IPA, THF, toluene, and water, thereby obtaining a milky white, uniform dimer acid-based polyamide resin aqueous dispersion E-3. The solid content concentration of E-3 was 20% by mass, the number average particle diameter of the resin in the dispersion was 0.065 $\mu$m, the pH was 10.3, and the viscosity was 8 mPa·s.

[Dimer Acid-based Polyamide Resin Aqueous Dispersion E-4]

As a dimer acid-based polyamide P-4, used was a polyamide resin containing 45 mol% of a dimer acid and 55 mol% of azelaic acid as the dicarboxylic acid component and 50 mol% of piperazine and 50 mol% of ethylenediamine as the diamine component, and having an acid value of 10.0 mg KOH/g, an amine value of 1.0 mg KOH/g, and a softening point of 170°C.
In a sealable, pressure resistant glass container (capacity: 1 liter) equipped with a stirrer and a heater, 75.0 g of the dimer acid-based polyamide P-4, 37.5 g of IPA, 37.5 g of THF, 7.2 g of N,N-dimethylethanolamine, and 217.8 g of distilled water were charged. While stirring at a rotation speed of 300 rpm, the system was heated inside, and heating and stirring were carried out at 120°C for 60 minutes. Thereafter, the mixture was cooled to near room temperature (about 30°C) with stirring, and after adding 100 g of distilled water, it was filtered through a 300 mesh stainless steel filter (wire diameter of 0.035 mm, plain woven) while very slightly pressurized. The obtained aqueous dispersion was placed in a 1 L eggplant flask and decompressed using an evaporator while being kept in a hot water bath heated to 80°C to remove about 100 g of the mixed media of IPA, THF, and water, thereby obtaining a milky white, uniform dimer acid-based polyamide resin aqueous dispersion E-4. The solid content concentration of E-4 was 20% by mass, the number average particle diameter of the resin in the dispersion was 0.045 $\mu$m, the pH was 10.6, and the viscosity was 5 mPa·s.

[Dimer Acid-based Polyamide Resin Aqueous Dispersion E-5]

As a dimer acid-based polyamide P-5, used was a polyamide resin containing 100 mol% of a dimer acid as the dicarboxylic acid component and 100 mol% of ethylenediamine as the diamine component, and having an acid value of 10.5 mg KOH/g, an amine value of 0.2 mg KOH/g, and a softening point of 163°C.
In a sealable, pressure resistant glass container (capacity: 1 liter) equipped with a stirrer and a heater, 110.0 g of the dimer acid-based polyamide P-5, 110.0 g of IPA, 110.0 g of THF, 9.2 g of N,N-dimethylethanolamine, 11.0 g of toluene, and 199.8 g of distilled water were charged. While stirring at a rotation speed of 300 rpm, the system was heated inside, and heating and stirring were carried out at 120°C for 60 minutes. Thereafter, the mixture was cooled to near room temperature (about 30°C) with stirring, and after adding 330 g of distilled water, it was filtered through a 300 mesh stainless steel filter (wire diameter of 0.035 mm, plain woven) while very slightly pressurized. The obtained aqueous dispersion was placed in a 1 L eggplant flask and decompressed using an evaporator while being kept in a hot water bath heated to 80°C to remove about 330 g of the mixed media of IPA, THF, toluene, and water, thereby obtaining a milky white, uniform dimer acid-based polyamide resin aqueous dispersion E-5. The solid content concentration of E-5 was 20% by mass, the number average particle diameter of the resin in the dispersion was 0.085 $\mu$m, the pH was 10.4, and the viscosity was 5 mPa·s.

[Polyolefin Resin Aqueous Dispersion N-1]

As a polyolefin P-6, "Bondine LX4110" manufactured by Arkema S.A. was used.
In a sealable, pressure resistant glass container (capacity: 1 liter) equipped with a stirrer and a heater, 60.0 g of the polyolefin resin P-6, 28.0 g of IPA, 1.5 g of triethylamine, and 210.5 g of distilled water were charged in the glass container. When stirring was performed setting the rotation speed of the stirring blade to 300 rpm, it was confirmed that no precipitation of the resin granular material was observed at the bottom of the container and that the resin was in a floating state. Thus, while maintaining this state, the heater was turned on to heat the system after 10 minutes. The temperature in the system was kept at 140°C and stirring was further performed for 20 minutes. After that, the container was placed in a water bath and cooled to room temperature (about 25°C) while stirring was continued at a rotation speed of 300 rpm, and then by pressure filtration (air pressure of 0.2 MPa) through a 300 mesh stainless steel filter (wire diameter of 0.035 mm, plain woven), a milky white, uniform polyolefin resin aqueous dispersion N-1 was obtained. The solid content concentration of N-1 was 20% by mass, and the viscosity was 70 mPa·s.

[TCD-based Polyester Resin Aqueous Dispersion S-1]

A mixture consisting of 3057 g of terephthalic acid, 474 g of sodium dimethyl 5-sulfoisophthalate, 1154 g of ethylene glycol, and 275 g of tricyclo[5.2.1.0$^{2,6}$]decanedimethanol was heated in an autoclave at 250°C for 4 hours to carry out an esterification reaction. At this time, the monomer components were blended as follows: terephthalic acid: sodium dimethyl 5-sulfoisophthalate: ethylene glycol: tricyclo[5.2.1.0$^{2,6}$]decanedimethanol = 92:8:93:7 (molar ratio). Then, after adding 0.525 g of antimony trioxide, 0.328 g of triethyl phosphate, and 1.580 g of zinc acetate dihydrate as catalysts, the temperature of the system was raised to 250°C, the pressure of the system was controlled at 0.4 MPa, and the reaction was carried out for 3 hours. After that, the pressure was gradually released and the reaction was carried out for 1 hour at normal pressure. The temperature was then increased to 270°C, and the pressure was gradually decreased to 13 Pa after one hour. The polycondensation reaction was further continued under these conditions, and after 2 hours and 30 minutes, the system was brought to normal pressure with nitrogen gas to terminate the polycondensation reaction. Then, while keeping the system pressurized with nitrogen gas, the resin was dispensed in a sheet form and allowed to be cooled. Then, the resin was crushed by a crusher and fractions with a size of 1 to 6 mm were collected using a sieve, thereby obtaining a granular TCD-based polyester P-7.

Using a sealable, cylindrical glass container with a jacket (internal capacity: 3 L) and a stirrer (manufactured by TOKYO RIKAKIKAI CO., LTD., "MAZELA NZ-1200"), 300 g of the TCD-based polyester P-7, 50 g of IPA, and 650 g of distilled water were individually charged in the glass container, and while stirring the mixture keeping the rotation speed of the stirring blade at 70 rpm, the temperature was raised by passing hot water through the jacket. The temperature raising was stopped when the internal temperature reached 80°C, and from that point, stirring was continued for 90 minutes. The internal temperature was kept at 72 ± 2°C during stirring. After that, cold water was passed through the jacket, and while stirring with the rotation speed decreased to 30 rpm, the temperature was cooled to 25°C, thereby obtaining a polyester resin dispersion. In a round bottom flask, 800 g of the obtained polyester resin dispersion was charged, 40 g of water was added, a mechanical stirrer and a Liebig condenser were installed, and the flask was heated in an oil bath at normal pressure to distill off 40 g of the aqueous medium. Thereafter, the mixture was cooled to room temperature, and with further stirring, ion exchanged water was finally added such that the solid content concentration reached 30% by mass, thereby obtaining a TCD-based polyester resin aqueous dispersion S-1. The viscosity of S-1 was 10 mPa·s.

[Polyester Resin Aqueous Dispersion S-2]

By adding distilled water and an acetylene glycol-based surfactant (manufactured by Nissin Chemical Co., Ltd., OLFINE E1004) to a water-soluble polyester resin (manufactured by Goo Chemical Co., Ltd., Plascoat RZ-142, solid content concentration of 25% by mass), a polyester resin aqueous dispersion S-2 with a composition of 5% by mass of polyester resin solid content and 0.005% by mass of surfactant was made.

[Acrylic Resin Aqueous Dispersion L-1]

An acrylic resin aqueous dispersion (manufactured by Aica Kogyo Co., Ltd., Ultrasol B-800, solid content concentration of 55% by mass) was used.

[Polyester-based Urethane Resin Aqueous Dispersion A-1]

An aqueous dispersion in which the composition of each unit constituting the resin is as follows: terephthalic acid/isophthalic acid/naphthalenedicarboxylic acid/sebacic acid/bisphenol A ethylene oxide/ethylene glycol/neopentyl glycol/trylene diisocyanate (5/10/10/10/30/5/15/15 (mol%)), and the solid content concentration is 20% by mass.

[Polyester-based Urethane Resin Aqueous Dispersion A-2]

An aqueous dispersion in which the composition is as follows: benzoic acid/bisphenol A ethylene oxide/xylylene diisocyanate (5/50/45 (mol%)), and the solid content concentration is 20% by mass.

[Polyester-based Urethane Resin Aqueous Dispersion A-3]

An aqueous dispersion in which the composition is as follows: terephthalic acid/isophthalic acid/diethylene glycol/isophorone diisocyanate (15/15/65/5 (mol%)), and the solid content concentration is 20% by mass.

[Polyether-based Urethane Resin Aqueous Dispersion A-4]

An aqueous dispersion in which the composition is as follows: polyethylene glycol/polypropylene glycol/tolylene diisocyanate (25/30/45 (mol%)), and the solid content concentration is 20% by mass.

[Polycarbonate-based Urethane Resin Aqueous Dispersion A-5]

An aqueous dispersion in which the composition is as follows: hexanediol/diethyl carbonate/tolylene diisocyanate (25/30/45 (mol%)), and the solid content concentration is 20% by mass.

The following were used as the inorganic fine particles constituting the resin layer:

F-1: Colloidal silica fine particles ("Quartron PL-1" manufactured by Fuso Chemical Co., Ltd.), average particle diameter of 0.015 $\mu$m;

F-2: Colloidal silica fine particles ("Quartron PL-3" manufactured by Fuso Chemical Co., Ltd.), average particle diameter of 0.035 $\mu$m;

F-3: Colloidal silica fine particles ("Quartron PL-7" manufactured by Fuso Chemical Co., Ltd.), average particle diameter of 0.075 $\mu$m; and

F-4: Silica fine particles ("Seahostar KE-W50" manufactured by Nippon Shokubai Co., Ltd.), average particle diameter of 0.5 $\mu$m and solid content concentration of 20% by mass.

The following were used as the organic fine particles constituting the resin layer:

F-5: Acrylic fine particles ("Uni-powder NMB-0220C" manufactured by JXTG Nippon Oil & Energy Corporation), average particle diameter of 2 $\mu$m;

F-6: Acrylic fine particles ("Uni-powder NMB-0520C" manufactured by JXTG Nippon Oil & Energy Corporation), average particle diameter of 5 $\mu$m;

F-7: Acrylic fine particles ("MX-150" manufactured by Soken Chemical & Engineering Co., Ltd.), average particle diameter of 1.5 $\mu$m;

F-8: Acrylic fine particles ("MX-80H3WT" manufactured by Soken Chemical & Engineering Co., Ltd.), average particle diameter of 0.9 $\mu$m;

F-9: Acrylic fine particles ("IX-3-BR-W-A-01-05" manufactured by Nippon Shokubai Co., Ltd.), average particle diameter of 0.5 $\mu$m;

F-10: Acrylic fine particles ("IX-3-BR-W-A-01-02" manufactured by Nippon Shokubai Co., Ltd.), average particle diameter of 0.2 $\mu$m;

F-11: Melamine-formaldehyde-based fine particles ("Epostar S6" manufactured by Nippon Shokubai Co., Ltd.), average particle diameter of 0.4 $\mu$m; and

F-12: Benzoguanamine-formaldehyde-based fine particles ("Epostar MS" manufactured by Nippon Shokubai Co., Ltd.), average particle diameter of 2 $\mu$m.

The following were used as the crosslinking agents: C-1: Aqueous solution of oxazoline compound (Epocros WS-700 manufactured by Nippon Shokubai Co., Ltd., solid content concentration of 25% by mass);

C-2: Epoxy group-containing polymer aqueous solution (manufactured by Adeka Corporation, Adeka Resin EM-051R, solid content concentration of 49.8% by mass); and

C-3: Carbodiimide group-containing polymer dispersion (manufactured by Nisshinbo Chemical Inc., Carbodilite series E-01, solid content concentration of 40% by mass).

The following were used as the resins constituting the base material.

[Semi-Aromatic Polyamide A]

In a reaction vessel, 3289 parts by mass of terephthalic acid (TA), 2533 parts by mass of 1,9-nonanediamine (NDA), 633 parts by mass of 2-methyl-1, 8-octanediamine (MODA), 48.9 parts by mass of benzoic acid (BA), 6.5 parts by mass of sodium hypophosphite monohydrate (0.1% by mass relative to the aforementioned four polyamide raw materials in total), and 2200 parts by mass of distilled water were placed, and the vessel was purged with nitrogen. The molar ratio of these raw materials (TA/BA/NDA/MODA) is 99/2/80/20.

The contents of the reaction vessel were stirred at 100°C for 30 minutes, and then the internal temperature was raised to 210°C over a period of 2 hours. At this time, the pressure inside the reaction vessel was raised to 2.12

MPa (22 kg/cm$^2$). After continuing the reaction as it was for 1 hour, the temperature was raised to 230°C. Then, the temperature was maintained at 230°C for 2 hours, and the reaction was carried out while maintaining the pressure at 2.12 MPa (22 kg/cm$^2$) by gradually removing water vapor. Next, the pressure was decreased to 0.98 MPa (10 kg/cm$^2$) over 30 minutes, and the reaction was further carried out for 1 hour to obtain a prepolymer. This prepolymer was dried at a temperature of 100°C for 12 hours under reduced pressure, and then crushed to a size of 2 mm or less.

Subsequently, the crushed prepolymer was subjected to solid phase polymerization under conditions with a temperature of 230°C and a pressure of 13.3 Pa (0.1 mmHg) for 10 hours, thereby obtaining a polymer. This was fed into a twin-screw extruder ("TEX44C" manufactured by The Japan Steel Works, LTD.), and melt-kneaded and extruded under conditions with a cylinder temperature of 320°C, then cooled and cut, thereby producing pellets of a semi-aromatic polyamide A.

The semi-aromatic polyamide A had a limiting viscosity of 1.17 dl/g, a melting point of 290°C, and a glass transition temperature of 125°C.

[Semi-Aromatic Polyamide B]

In a reaction vessel, 489 parts by mass of terephthalic acid (TA), 507 parts by mass of 1,10-decanediamine (DDA), 2.8 parts by mass of benzoic acid (BA), 1.0 part by mass of sodium hypophosphite monohydrate (0.1% by mass relative to the aforementioned four polyamide raw materials in total), and 1000 parts by mass of distilled water were placed, and the vessel was purged with nitrogen. The molar ratio of these raw materials (TA/BA/DDA) is 99/2/100.

The contents of the reaction vessel were stirred at 80°C for 0.5 hours at 28 rotations per minute, and then the temperature was raised to 230°C. Subsequently, the contents were heated at 230°C for 3 hours. Then, the reaction product was cooled and taken out.

That reaction product was crushed, then heated in a dryer at 220°C for 5 hours under a stream of nitrogen, and subjected to solid phase polymerization to obtain a polymer. This was fed into a twin-screw extruder ("TEX44C" manufactured by The Japan Steel Works, LTD.), and melt-kneaded and extruded under conditions with a cylinder temperature of 320°C, then cooled and cut, thereby producing pellets of a semi-aromatic polyamide B.

The semi-aromatic polyamide B had a limiting viscosity of 1.24 dl/g, a melting point of 316°C, and a glass transition temperature of 150°C.

[Semi-Aromatic Polyamide C]

As a semi-aromatic polyamide C, Nylon-MXD6 "S6007" manufactured by Mitsubishi Gas Chemical Company, Inc. was used.

[Resin D]

As a resin D, a nylon 6 (aliphatic polyamide) (nylon 6 "A1030BRF-BA" manufactured by Unitika Ltd.) was used.

[Resin E]

As a resin E, a PET (PET "NEH-2050" manufactured by Unitika Ltd.) was used.

[Resin F]

As a resin F, a PEN (Teonex "TN8065S" manufactured by TEIJIN LIMITED) was used.

[Silica-Containing Master Chip (M1)]

98 parts by mass of the semi-aromatic polyamide A and 2 parts by mass of silica (Tosoh Silica Corporation, NIPGEL AZ-204, particle diameter of 1.7 μm) were melt-kneaded to make a master chip (M1).

Example 1

<Preparation of Coating Agent for Resin Layer Formation>

The dimer acid-based polyamide resin aqueous dispersion E-1 and the crosslinking agent C-1 were mixed such that the solid content mass ratio of each component was 100:10, and the mixture was mixed and stirred at room temperature for 5 minutes. Furthermore, the silica fine particles F-2 were mixed therewith so that the content of silica fine particles relative to the entire components constituting the resin layer was 25% by mass, thereby obtaining a coating agent for resin layer formation.

<Production of Laminated Film>

The semi-aromatic polyamide A was introduced into and molten in a 65 mm single-screw extruder with the cylinder temperature set to 295°C (former stage), 320°C (middle stage), and 320°C (latter stage), and extruded into a film form through a T-die set to 320°C. The film was cooled by pressing and closely adhering it onto a cooling roll with the circulating oil temperature set to 50°C by the electrostatic application method, thereby obtaining an unstretched film with a thickness of 250 $\mu$m that was substantially unoriented. Note that the cooling roll used was one whose surface was coated with ceramic ($Al_2O_3$) to a thickness of 0.15 mm. Also, the surface of the ceramic coating layer was discharged by placing two carbon brushes side by side upstream from the point where the roll surface comes into contact with the film and bringing them into contact with the cooling roll, and grounding the holders of the carbon brushes. A tungsten wire with a diameter of 0.2 mm was used as the electrode, and a voltage of 6.5 kV was applied with a 300 W (15 kV $\times$ 20 mA) DC high-voltage generator.

Next, the coating agent for resin layer formation described above was applied to one surface of the unstretched film with a gravure roll such that the amount of applied resin after stretching was 0.3 g/m$^2$. Then, while gripping the unstretched film with clips at both ends, it was led into a tenter-type simultaneous biaxial stretching machine (manufactured by Hitachi, Ltd.) and subjected to simultaneous biaxial stretching with a preheating section temperature of 125°C, a stretching section temperature of 130°C, a longitudinal stretching strain rate of 2400%/min, a transverse stretching strain rate of 2760%/min, a stretching ratio in the longitudinal direction of 3.0 times, and a stretching ratio in the transverse direction of 3.3 times. Then, in the same tenter, the film was subjected to heat setting at 285°C, and after performing a 5% relaxation treatment in the width direction of the film, it was slowly and uniformly cooled. Both ends of the film were released from the clips, the edges were trimmed, and a film with a length of 500 m and a width of 0.5 m was rolled up, thereby obtaining a laminated film in which a resin layer with a thickness of 0.30 $\mu$m was provided on a biaxially stretched semi-aromatic polyamide film with a thickness of 25 $\mu$m.

Example 2

A laminated film in which a resin layer with a thickness of 0.15 $\mu$m was provided on both surfaces of the semi-aromatic polyamide film was obtained in the same manner as in Example 1, except that the fine particle content was changed to that shown in Table 1 and the coating agent for resin layer formation was changed to be applied to both surfaces with a gravure roll such that the amount of resin coating film for one surface after stretching was 0.15 g/m$^2$.

Examples 3 to 19, 26 to 29, 33 to 42, 46 to 59, and 61 to 76

Laminated films were obtained in the same manner as in Example 1, except that the type of resin, the type and content of crosslinking agent, and the type, particle diameter, and content of fine particles in the coating agent for resin layer formation, as well as the thickness of the resin layer, were changed to those shown in the tables. For Examples 61 to 76, two types of fine particles were mixed.

Examples 20 and 30

An unstretched film was obtained in the same manner as in Example 1, and then, while gripping the unstretched film with clips at both ends, it was led into a tenter-type simultaneous biaxial stretching machine (manufactured by Hitachi, Ltd.) and subjected to simultaneous biaxial stretching with a preheating section temperature of 125°C, a stretching section temperature of 130°C, a longitudinal stretching strain rate of 2400%/min, a transverse stretching strain rate of 2760%/min, a stretching ratio in the longitudinal direction of 3.0 times, and a stretching ratio in the transverse direction of 3.3 times. Then, in the same tenter, the film was subjected to heat setting at 285°C, and after performing a 5% relaxation treatment in the width direction of the film, it was slowly and uniformly cooled. Both ends of the film were released from the clips, and the edges were trimmed.

After that, a coating agent for resin layer formation with the composition shown in the tables was applied to one surface of the stretched film with a gravure roll, and then dried at 115°C in a dryer. A film with a length of 500 m and a width of 0.5 m was rolled up, thereby obtaining a laminated film in which a resin layer with a thickness of 0.30 $\mu$m was provided on a biaxially stretched semi-aromatic polyamide film with a thickness of 25 $\mu$m.

Example 21

After obtaining an unstretched film in the same manner as in Example 1, the unstretched film was stretched by 2.0 times with a roll-type longitudinal stretching machine under conditions of 130°C.

Next, a coating agent for resin layer formation with the composition shown in the table was applied to one surface of the longitudinally stretched semi-aromatic polyamide film with a gravure roll such that the amount of applied resin after stretching was 0.3 g/m$^2$. Thereafter, successively, the ends of the sheet were gripped by clips of a flat-type stretching machine, transverse stretching was performed by 2.5 times under conditions of 140°C, and then the sheet was subjected to heat setting at 285°C with a relaxation rate of 5% in the transverse direction, thereby obtaining a laminated film in which a resin layer with a thickness of 0.30 $\mu$m was provided on one surface of a sequentially and biaxially stretched semi-aromatic polyamide film with a thickness of 50 $\mu$m.

Examples 22 and 60

In Example 22, in the same manner as in Example 21 except that the thickness of the unstretched film was changed to 375 $\mu$m, a laminated film in which a resin layer with a thickness of 0.30 $\mu$m was provided on one surface of a sequentially and biaxially stretched semi-aromatic polyamide film with a thickness of 75 $\mu$m was obtained.

In Example 60, in the same manner as in Example 21 except that the thickness of the unstretched film was changed to 125 $\mu$m and that a coating agent for resin layer formation with the composition shown in the table was applied, a laminated film in which a resin layer with a thickness of 0.30 $\mu$m was provided on one surface of a sequentially and biaxially stretched semi-aromatic polyamide film with a thickness of 25 $\mu$m was obtained.

Example 23

In the same manner as in Example 14 except that the silica-containing master chip M1 was mixed in such that the silica content relative to the entire components constituting the base film was 0.05% by mass, a laminated film with a thickness of 25 $\mu$m in which a resin layer with a thickness of 0.30 $\mu$m was provided on one surface was obtained.

Example 24

The semi-aromatic polyamide B was introduced into and molten in a 65 mm single-screw extruder with the cylinder temperature set to 310°C (former stage), 330°C (middle stage), and 330°C (latter stage), and extruded into a film form through a T-die set to 330°C. The film was cooled by pressing and closely adhering it onto a cooling roll with the circulating oil temperature set to 50°C by the electrostatic application method, thereby obtaining an unstretched film with a thickness of 250 $\mu$m that was substantially unoriented.

Next, a coating agent for resin layer formation with the composition shown in the table was applied to one surface of the unstretched film with a gravure roll such that the amount of applied resin after stretching was 0.3 g/m$^2$. Then, while gripping the unstretched film with clips at both ends, it was led into a tenter-type simultaneous biaxial stretching machine (manufactured by Hitachi, Ltd.) and subjected to simultaneous biaxial stretching with a preheating section temperature of 150°C, a stretching section temperature of 160°C, a longitudinal stretching strain rate of 2400%/min, a transverse stretching strain rate of 2760%/min, a stretching ratio in the longitudinal direction of 3.0 times, and a stretching ratio in the transverse direction of 3.3 times. Then, in the same tenter, the film was subjected to heat setting at 300°C, and after performing a 5% relaxation treatment in the width direction of the film, it was slowly and uniformly cooled. Both ends of the film were released from the clips, the edges were trimmed, and a film with a length of 500 m and a width of 0.5 m was rolled up, thereby obtaining a laminated film in which a resin layer with a thickness of 0.30 $\mu$m was provided on a biaxially stretched semi-aromatic polyamide film with a thickness of 25 $\mu$m.

Example 25

The semi-aromatic polyamide C was introduced into and molten in a 65 mm single-screw extruder with the cylinder temperature set to 240°C (former stage), 280°C (middle stage), and 270°C (latter stage), and extruded into a film form through a T-die set to 270°C. The film was cooled by pressing and closely adhering it onto a cooling roll with the circulating oil temperature set to 30°C by the air knife method, thereby obtaining an unstretched film with a thickness of 100 $\mu$m that was substantially unoriented.

Next, a coating agent for resin layer formation with the composition shown in the table was applied to one surface of the unstretched film with a gravure roll such that the amount of applied resin after stretching was 0.3 g/m$^2$. Then, while gripping the unstretched film with clips at both ends, it was led into a tenter-type simultaneous biaxial stretching machine (manufactured by Hitachi, Ltd.) and subjected to simultaneous biaxial stretching with a preheating section temperature of 140°C, a stretching section temperature of 145°C, a longitudinal stretching strain rate of 2400%/min, a transverse stretching strain rate of 2760%/min, a stretching ratio in the longitudinal direction of 2.0 times, and a stretching ratio in the transverse direction of 2.0 times. Then, in the same tenter, the film was subjected to heat setting at 250°C, and after performing a 5% relaxation treatment in the width direction of the film, it was slowly and uniformly cooled. Both ends of the film were released from the clips, the edges were trimmed, and a film with a length of 50 m and a width of 0.5 m was rolled up, thereby obtaining a laminated film in which a resin layer with a thickness of 0.30 $\mu$m was provided on a biaxially stretched semi-aromatic polyamide film with a thickness of 25 $\mu$m.

Examples 31 and 32

Laminated films were obtained in the same manner as in Example 2, except that the type of resin and the content of fine particles in the coating agent for resin layer formation were changed to those shown in the table.

Example 43

A laminated film was obtained in the same manner as in Example 23, except that the type of resin, the content of crosslinking agent, and the type, particle diameter, and content of fine particles in the coating agent for resin layer formation were changed to those shown in the table.

Example 44

A laminated film was obtained in the same manner as in Example 24, except that the type of resin, the content of crosslinking agent, and the type, particle diameter, and content of fine particles in the coating agent for resin layer formation were changed to those shown in the table.

Example 45

A laminated film was obtained in the same manner as in Example 25, except that the type of resin, the content of crosslinking agent, and the type, particle diameter, and content of fine particles in the coating agent for resin layer formation were changed to those shown in the table.

Comparative Example 1

A semi-aromatic polyamide film was obtained by carrying out the same operations as in Example 1, except that the coating agent for resin layer formation was not applied.

Comparative Example 2

A semi-aromatic polyamide film was obtained by carrying out the same operations as in Example 23, except that the coating agent for resin layer formation was not applied.

Comparative Example 3

A laminated film was obtained by carrying out the same operations as in Example 10, except that the resin layer was formed such that the thickness of the resin layer was 0.025 $\mu$m.

Comparative Example 4

A laminated film was obtained by carrying out the same operations as in Example 10, except that the resin layer was formed such that the thickness of the resin layer was 0.60 $\mu$m.

Comparative Example 5

The resin D (nylon 6 (aliphatic polyamide)) was introduced into and molten in a 65 mm single-screw extruder with the cylinder temperature set to 210°C (former stage), 260°C (middle stage), and 230°C (latter stage), and extruded into a film form through a T-die set to 230°C. The film was cooled by pressing and closely adhering it onto a cooling roll with the circulating oil temperature set to 30°C by the air knife method, thereby obtaining an unstretched film with a thickness of 250 $\mu$m that was substantially unoriented.

Subsequently, the unstretched sheet was immersed in a warm water tank where the water temperature was adjusted to 65°C such that the obtained unstretched film had a moisture content of 3.5% by mass, and the warm water on the surface of the unstretched film was removed with a draining roll.

Next, a coating agent for resin layer formation with the composition shown in the table was applied to one surface of the unstretched film with a gravure roll such that the amount of applied resin after stretching was 0.3 g/m$^2$. Then, while gripping the unstretched film with clips at both ends, it was led into a tenter-type simultaneous biaxial stretching machine (manufactured by Hitachi, Ltd.) and subjected to simultaneous biaxial stretching with a preheating section temperature of 215°C, a stretching section temperature of 200°C, a longitudinal stretching strain rate of 2400%/min, a transverse stretching strain rate of 2760%/min, a stretching ratio in the longitudinal direction of 3.0 times, and a stretching ratio in the transverse direction of 3.3 times. Then, in the same tenter, the film was subjected to heat setting at 210°C, and after performing a 5% relaxation treatment in the width direction of the film, it was slowly and uniformly cooled. Both ends of the film were released from the clips, the edges were trimmed, and a film with a length of 500 m and a width of 0.5 m was rolled up, thereby obtaining a laminated film in which a resin layer with a thickness of 0.30 μm was provided on a biaxially stretched aliphatic polyamide (nylon 6) film with a thickness of 25 μm.

Comparative Example 6

The resin E (PET) was introduced into and molten in a 65 mm single-screw extruder with the cylinder temperature set to 260°C (former stage), 280°C (middle stage), and 280°C (latter stage), and extruded into a film form through a T-die set to 280°C. The film was cooled by pressing and closely adhering it onto a cooling roll with the circulating oil temperature set to 20°C by the electrostatic application method, thereby obtaining an unstretched film with a thickness of 375 μm that was substantially unoriented.

The obtained unstretched film was stretched by 3.4 times with a roll-type longitudinal stretching machine under conditions of 85°C. Next, a coating agent for resin layer formation with the composition shown in the table was applied to one surface of the film with a gravure roll such that the amount of applied resin after stretching was 0.3 g/m$^2$. Thereafter, successively, the ends of the sheet were gripped by clips of a flat-type stretching machine, transverse stretching was performed by 4.4 times under conditions of 120°C, and then the sheet was subjected to heat setting at 240°C with a relaxation rate of 5% in the transverse direction, thereby obtaining a laminated film in which a resin layer with a thickness of 0.30 μm was provided on one surface of a PET film with a thickness of 25 μm.

Comparative Example 7

The resin F (PEN) was introduced into and molten in a 65 mm single-screw extruder with the cylinder temperature set to 260°C (former stage), 285°C (middle stage), and 285°C (latter stage), and extruded into a film form through a T-die set to 285°C. The film was cooled by pressing and closely adhering it onto a cooling roll with the circulating oil temperature set to 50°C by the electrostatic application method, thereby obtaining an unstretched film with a thickness of 625 μm that was substantially unoriented.

The obtained unstretched film was stretched by 5.0 times with a roll-type longitudinal stretching machine under conditions of 130°C. Next, a coating agent for resin layer formation with the composition shown in the table was applied to one surface of the film with a gravure roll such that the amount of applied resin after stretching was 0.3 g/m$^2$. Thereafter, successively, the ends of the sheet were gripped by clips of a flat-type stretching machine, transverse stretching was performed by 5.0 times under conditions of 135°C, and then the sheet was subjected to heat setting at 245°C with a relaxation rate of 5% in the transverse direction, thereby obtaining a laminated film in which a resin layer with a thickness of 0.30 μm was provided on one surface of a PEN film with a thickness of 25 μm.

Comparative Example 8

In Example 10, an unstretched film that was substantially unoriented was made such that the thickness of the unstretched film was 25 μm.

The coating agent for resin layer formation used in Example 10 was applied to one surface of the unstretched film with a gravure roll such that the thickness was 0.30 μm, and dried at 100°C for 30 seconds, thereby obtaining a laminated film.

For the films obtained in Examples 1 to 76 and Comparative Examples 1 to 8, the results of evaluation are shown in Tables 1 to 7.

[Table 1]

| | | | | Example | | | | | | | | | | | |
|---|---|---|---|---|---|---|---|---|---|---|---|---|---|---|---|
| | | | | 1 | 2 | 3 | 4 | 5 | 6 | 7 | 8 | 9 | 10 | 11 | 12 |
| Base film (I) | Resin type | | | A | A | A | A | A | A | A | A | A | A | A | A |
| | Silica | Particle diameter | μm | — | — | — | — | — | — | — | — | — | — | — | — |
| | | Content | %[1] | — | — | — | — | — | — | — | — | — | — | — | — |
| | Thickness | | μm | 25 | 25 | 25 | 25 | 25 | 25 | 25 | 25 | 25 | 25 | 25 | 25 |
| Resin layer (II) | Resin | Aqueous dispersion type | | E-1 | E-1 | E-1 | E-1 | E-1 | E-1 | E-1 | E-1 | E-1 | E-1 | E-1 | E-1 |
| | Crosslinking agent | Type | | C-1 | C-1 | C-1 | C-1 | C-1 | C-1 | C-1 | C-1 | C-1 | C-1 | C-1 | C-1 |
| | | Parts[2] | | 10 | 10 | 10 | 10 | 10 | 10 | 10 | 10 | 10 | 10 | 10 | 10 |
| | Fine particle 1 | Type | | F-2 | F-2 | F-2 | F-2 | F-1 | F-5 | F-5 | F-5 | F-6 | F-3 | F-3 | F-3 |
| | | Particle diameter | μm | 0.035 | 0.035 | 0.035 | 0.035 | 0.015 | 2.0 | 2.0 | 2.0 | 5.0 | 0.075 | 0.075 | 0.075 |
| | | Content | %[3] | 25 | 9 | 0.05 | 40 | 40 | 0.1 | 1 | 0.2 | 1 | 16 | 16 | 16 |
| | Fine particle 2 | Type | | — | — | — | — | — | — | — | F-3 | — | — | — | — |
| | | Particle diameter | μm | — | — | — | — | — | — | — | 0.075 | — | — | — | — |
| | | Content | %[3] | — | — | — | — | — | — | — | 1 | — | — | — | — |
| | Thickness | | μm | 0.30 | 0.30 (Both surfaces in total) | 0.30 | 0.30 | 0.30 | 0.30 | 0.30 | 0.30 | 0.30 | 0.30 | 0.27 | 0.15 |
| Stretching conditions | Stretched or unstretched before and after application of coating agent | Before application | | Unstretched | Unstretched | Unstretched | Unstretched | Unstretched | Unstretched | Unstretched | Unstretched | Unstretched | Unstretched | Unstretched | Unstretched |
| | | After application | | Stretched | Stretched | Stretched | Stretched | Stretched | Stretched | Stretched | Stretched | Stretched | Stretched | Stretched | Stretched |
| Laminated film characteristics | Close adhesion | | | 100 | 100 | 100 | 95 | 95 | 100 | 100 | 100 | 100 | 100 | 100 | 100 |
| | Haze | | % | 2.7 | 0.4 | 0.2 | 31.2 | 33.4 | 0.4 | 1.9 | 0.6 | 0.4 | 2.1 | 0.8 | 0.4 |
| | Total light transmittance | | % | 89.0 | 90.5 | 91.0 | 82.0 | 81.5 | 87.8 | 86.8 | 90.1 | 90.0 | 88.5 | 88.4 | 89.1 |
| | Flex resistance | | | Excellent | Excellent | Excellent | Excellent | Excellent | Excellent | Excellent | Excellent | Excellent | Excellent | Excellent | Excellent |
| | Dynamic friction coefficient (II/II) | | | 0.47 | 0.62 | 0.83 | 0.63 | 0.75 | 0.49 | 0.33 | 0.39 | 0.29 | 0.64 | 0.65 | 0.46 |
| | Thermal shrinkage factor | MD | % | 1.7 | 1.7 | 1.7 | 1.7 | 1.7 | 1.7 | 1.7 | 1.7 | 1.7 | 1.7 | 2.6 | 1.7 |
| | | TD | | 0.4 | 0.4 | 0.4 | 0.4 | 0.4 | 0.4 | 0.4 | 0.4 | 0.4 | 0.4 | 0.5 | 0.4 |
| | Blocking resistance | | | Good | Good | Good | Good | Good | Good | Good | Excellent | Good | Good | Good | Good |
| Hard coat layer (HC) formed product | Adhesiveness | | | Excellent | Excellent | Excellent | Good | Good | Excellent | Excellent | Excellent | Excellent | Excellent | Excellent | Excellent |
| | Haze | | % | 0.3 | 0.3 | 0.2 | 14.1 | 15.9 | 0.2 | 0.3 | 0.3 | 0.3 | 0.2 | 0.5 | 0.2 |
| | Total light transmittance | | % | 91.0 | 91.0 | 91.1 | 88.3 | 88.0 | 91.1 | 91.0 | 91.0 | 91.0 | 91.0 | 90.7 | 90.9 |
| | Dynamic friction coefficient (I/HC) | | | 0.60 | 0.64 | 0.91 | 0.72 | 0.80 | 0.55 | 0.47 | 0.27 | 0.45 | 0.64 | 0.64 | 0.62 |
| | Interference fringe | | | Poor | Poor | Poor | Poor | Poor | Poor | Poor | Poor | Poor | Poor | Poor | Poor |
| | Pencil hardness | | | HB | HB | HB | HB | HB | HB | HB | HB | HB | HB | H | H |

[1] % by mass relative to the entire components constituting base film (I)

[2] Parts by mass relative to 100 parts by mass of the resin constituting resin layer (II)

[3] % by mass relative to the entire components constituting resin layer (II)

[Table 2]

| | | | | Example | | | | | | | | | | | |
|---|---|---|---|---|---|---|---|---|---|---|---|---|---|---|---|
| | | | | 13 | 14 | 15 | 16 | 17 | 18 | 19 | 20 | 21 | 22 | 23 | 24 | 25 |
| | | Resin type | | A | A | A | A | A | A | A | A | A | A | A+M1 | B | C |
| Base film (I) | Silica | Particle diameter | μm | — | — | — | — | — | — | — | — | — | — | 1.7 | — | — |
| | | Content | %[1] | — | — | — | — | — | — | — | — | — | — | 0.05 | — | — |
| | Thickness | | μm | 25 | 25 | 25 | 25 | 25 | 25 | 25 | 25 | 50 | 75 | 25 | 25 | 25 |
| Resin layer (II) | Resin | Aqueous dispersion type | | E-1 | E-1 | E-1 | E-1 | E-1 | E-1 | E-1 | E-1 | E-1 | E-1 | E-1 | E-1 | E-1 |
| | Crosslinking agent | Type | | C-1 | C-1 | C-1 | C-1 | — | C-2 | C-3 | C-1 | C-1 | C-1 | C-1 | C-1 | C-1 |
| | | Parts[2] | | 10 | 10 | 8.2 | 5 | 0 | 10 | 10 | 10 | 10 | 10 | 10 | 10 | 10 |
| | Fine particle 1 | Type | | F-3 | F-3 | F-3 | F-3 | F-3 | F-3 | F-3 | F-3 | F-3 | F-3 | F-3 | F-3 | F-3 |
| | | Particle diameter | μm | 0.075 | 0.075 | 0.075 | 0.075 | 0.075 | 0.075 | 0.075 | 0.075 | 0.075 | 0.075 | 0.075 | 0.075 | 0.075 |
| | | Content | %[3] | 16 | 16 | 9.7 | 16 | 16 | 16 | 16 | 16 | 16 | 16 | 16 | 16 | 16 |
| | Fine particle 2 | Type | | — | — | F-5 | — | — | — | — | — | — | — | — | — | — |
| | | Particle diameter | μm | — | — | 2 | — | — | — | — | — | — | — | — | — | — |
| | | Content | %[3] | — | — | 0.3 | — | — | — | — | — | — | — | — | — | — |
| | Thickness | | μm | 0.075 | 0.030 | 0.03 | 0.30 | 0.30 | 0.15 | 0.15 | 0.30 | 0.30 | 0.30 | 0.30 | 0.30 | 0.03 |
| Stretching conditions | Stretched or unstretched before and after application of coating agent | Before application | | Unstretched | Unstretched | Unstretched | Unstretched | Unstretched | Unstretched | Unstretched | Stretched | Stretched | Stretched | Unstretched | Unstretched | Unstretched |
| | | After application | | Stretched | Stretched | Stretched | Stretched | Stretched | Stretched | Stretched | Unstretched | Stretched | Stretched | Stretched | Stretched | Stretched |
| Laminated film characteristics | Close adhesion | | | 100 | 100 | 100 | 100 | 100 | 100 | 100 | 95 | 100 | 100 | 100 | 100 | 100 |
| | Haze | | % | 1.0 | 0.9 | 0.8 | 0.5 | 0.3 | 0.4 | 0.4 | 1.0 | 1.5 | 1.8 | 2.5 | 1.2 | 3.9 |
| | Total light transmittance | | % | 89.9 | 90.0 | 89.7 | 90.5 | 89.3 | 88.3 | 88.1 | 89.3 | 88.1 | 88.4 | 88.4 | 87.6 | 87.8 |
| | Flex resistance | | | Excellent | Excellent | Excellent | Excellent | Excellent | Excellent | Excellent | Excellent | Excellent | Excellent | Excellent | Excellent | Good |
| | Dynamic friction coefficient (II/II) | | | 0.47 | 0.57 | 0.40 | 0.66 | 0.69 | 0.46 | 0.46 | 0.64 | 0.64 | 0.64 | 0.52 | 0.63 | 0.64 |
| | Thermal shrinkage factor | MD | % | 1.5 | 1.5 | 1.5 | 1.7 | 1.7 | 1.7 | 1.7 | 1.7 | 1.5 | 1.3 | 1.7 | 0.9 | 2.9 |
| | | TD | | 0.3 | 0.3 | 0.3 | 0.4 | 0.4 | 0.4 | 0.4 | 0.4 | 0.2 | 0.1 | 0.4 | 0.0 | 2.9 |
| | Blocking resistance | | | Good | Good | Good | Good | Good | Good | Good | Good | Good | Good | Good | Good | Good |
| Hard coat layer (HC) formed product | Adhesiveness | | | Excellent | Excellent | Excellent | Excellent | Excellent | Excellent | Excellent | Excellent | Excellent | Excellent | Excellent | Excellent | Excellent |
| | Haze | | % | 0.3 | 0.2 | 0.3 | 0.4 | 0.1 | 0.3 | 0.3 | 0.2 | 0.5 | 0.7 | 1.7 | 0.4 | 2.9 |
| | Total light transmittance | | % | 91.1 | 91.1 | 91.0 | 90.8 | 91.1 | 90.5 | 89.9 | 91.1 | 90.5 | 90.6 | 90.9 | 89.5 | 88.0 |
| | Dynamic friction coefficient (I/HC) | | | 0.55 | 0.52 | 0.40 | 0.60 | 0.60 | 0.63 | 0.65 | 0.64 | 0.64 | 0.64 | 0.61 | 0.65 | 0.64 |
| | Interference fringe | | | Poor | Poor | Poor | Poor | Poor | Poor | Poor | Poor | Poor | Poor | Poor | Poor | Poor |
| | Pencil hardness | | | HB | HB | HB | HB | HB | HB | HB | HB | H | H | HB | HB | HB |

[1] % by mass relative to the entire components constituting base film (

[2] Parts by mass relative to 100 parts by mass of the resin constituting

[3] % by mass relative to the entire components constituting resin layer

[Table 3]

| | | | | Example | | | | | | | | | | |
|---|---|---|---|---|---|---|---|---|---|---|---|---|---|---|
| | | | | 26 | 27 | 28 | 29 | 30 | 31 | 32 | 33 | 34 | 35 | 36 |
| | | Resin type | | A | A | A | A | A | A | A | A | A | A | A |
| Base film (I) | Silica | Particle diameter | µm | — | — | — | — | — | — | — | — | — | — | — |
| | | Content | %[1] | — | — | — | — | — | — | — | — | — | — | — |
| | Thickness | | µm | 25 | 25 | 25 | 25 | 25 | 25 | 25 | 25 | 25 | 25 | 25 |
| Resin layer (II) | Resin | Aqueous dispersion type | | E-2 | E-3 | E-4 | E-5 | N-1 | S-1 | S-2 | L-1 | A-1 | A-1 | A-1 |
| | Crosslinking agent | Type | | C-1 | C-1 | C-1 | C-1 | C-1 | C-1 | C-1 | C-1 | — | — | — |
| | | Parts[2] | | 10 | 10 | 10 | 10 | 10 | 10 | 10 | 10 | — | — | — |
| | Fine particle 1 | Type | | F-3 | F-3 | F-3 | F-3 | F-3 | F-2 | F-2 | F-5 | F-5 | F-5 | F-5 |
| | | Particle diameter | µm | 0.075 | 0.075 | 0.075 | 0.075 | 0.075 | 0.035 | 0.035 | 2.0 | 2.0 | 2.0 | 2.0 |
| | | Content | %[3] | 16 | 16 | 16 | 16 | 16 | 25 | 25 | 1 | 0.2 | 0.2 | 0.2 |
| | Fine particle 2 | Type | | — | — | — | — | — | — | — | — | — | — | — |
| | | Particle diameter | µm | — | — | — | — | — | — | — | — | — | — | — |
| | | Content | %[3] | — | — | — | — | — | — | — | — | — | — | — |
| | Thickness | | µm | 0.30 | 0.30 | 0.30 | 0.30 | 0.30 | 0.30 (Both surfaces in total) | 0.30 (Both surfaces in total) | 0.30 | 0.30 | 0.20 | 0.50 |
| Stretching conditions | Stretched or unstretched before and after application of coating agent | Before application | | Unstretched | Unstretched | Unstretched | Unstretched | Stretched | Unstretched | Unstretched | Unstretched | Unstretched | Unstretched | Unstretched |
| | | After application | | Stretched | Stretched | Stretched | Stretched | Unstretched | Stretched | Stretched | Stretched | Stretched | Stretched | Stretched |
| Laminated film characteristics | Close adhesion | | | 100 | 100 | 100 | 95 | 95 | 100 | 100 | 100 | 100 | 100 | 100 |
| | Haze | | % | 1.2 | 0.9 | 1.1 | 1.0 | 1.0 | 3.0 | 2.9 | 0.9 | 0.5 | 0.3 | 1.0 |
| | Total light transmittance | | % | 90.5 | 90.3 | 90.7 | 89.2 | 89.6 | 89.5 | 89.5 | 88.0 | 90.5 | 90.8 | 88.9 |
| | Flex resistance | | | Excellent | Excellent | Excellent | Excellent | Excellent | Excellent | Excellent | Excellent | Excellent | Excellent | Excellent |
| | Dynamic friction coefficient (II/II) | | | 0.61 | 0.66 | 0.64 | 0.70 | 0.55 | 0.50 | 0.54 | 0.30 | 0.33 | 0.61 | 0.21 |
| | Thermal shrinkage factor | MD | % | 1.7 | 1.7 | 1.7 | 1.7 | 1.7 | 1.8 | 1.8 | 1.7 | 1.7 | 1.7 | 1.7 |
| | | TD | | 0.4 | 0.4 | 0.4 | 0.4 | 0.4 | 0.5 | 0.5 | 0.4 | 0.4 | 0.4 | 0.4 |
| | Blocking resistance | | | Good | Good | Good | Good | Good | Good | Good | Good | Fair | Fair | Fair |
| Hard coat layer (HC) formed product | Adhesiveness | | | Excellent | Excellent | Good | Fair | Fair | Excellent | Good | Excellent | Excellent | Excellent | Excellent |
| | Haze | | % | 0.3 | 0.3 | 0.2 | 0.3 | 0.3 | 0.3 | 0.3 | 0.2 | 0.2 | 0.2 | 0.4 |
| | Total light transmittance | | % | 91.0 | 90.8 | 91.1 | 91.0 | 91.0 | 91.0 | 91.0 | 90.5 | 90.7 | 90.8 | 90.5 |
| | Dynamic friction coefficient (I/HC) | | | 0.66 | 0.65 | 0.64 | 0.73 | 0.58 | 0.61 | 0.62 | 0.66 | 0.40 | 0.78 | 0.30 |
| | Interference fringe | | | Poor | Poor | Poor | Poor | Poor | Poor | Poor | Fair | Good | Good | Good |
| | Pencil hardness | | | HB | HB | HB | HB | HB | HB | HB | H | H | H | H |

[1] % by mass relative to the entire components constituting base film (

[2] Parts by mass relative to 100 parts by mass of the resin constituting

[3] % by mass relative to the entire components constituting resin layer

[Table 4]

| | | | | Example | | | | | | | | | | | | | |
|---|---|---|---|---|---|---|---|---|---|---|---|---|---|---|---|---|---|
| | | | | 37 | 38 | 39 | 40 | 41 | 42 | 43 | 44 | 45 | 46 | 47 | 48 | 49 | 50 |
| Base film (I) | | Resin type | | A | A | A | A | A | A | A+M1 | B | C | A | A | A | A | A |
| | Silica | Particle diameter | µm | — | — | — | — | — | — | 1.7 | — | — | — | — | — | — | — |
| | | Content | %[1] | — | — | — | — | — | — | 0.05 | — | — | — | — | — | — | — |
| | Thickness | | µm | 25 | 25 | 25 | 25 | 35 | 50 | 25 | 25 | 25 | 25 | 25 | 25 | 25 | 25 |
| Resin layer (II) | Resin | Aqueous dispersion type | | A-2 | A-3 | A-4 | A-5 | A-1 | A-1 | A-1 | A-1 | A-1 | A-1 | A-1 | A-1 | A-1 | A-1 |
| | Crosslinking agent | Type | | — | — | — | — | — | — | — | — | — | — | — | — | — | — |
| | | Parts[2] | | — | — | — | — | — | — | — | — | — | — | — | — | — | — |
| | Fine particle 1 | Type | | F-5 | F-5 | F-5 | F-5 | F-5 | F-5 | F-5 | F-5 | F-5 | — | F-5 | F-5 | F-5 | F-5 |
| | | Particle diameter | µm | 2.0 | 2.0 | 2.0 | 2.0 | 2.0 | 2.0 | 2.0 | 2.0 | 2.0 | — | 2.0 | 2.0 | 2.0 | 2.0 |
| | | Content | %[3] | 0.2 | 0.2 | 0.2 | 0.2 | 0.2 | 0.2 | 0.2 | 0.2 | 0.2 | — | 0.1 | 0.5 | 1.0 | 1.1 |
| | Fine particle 2 | Type | | — | — | — | — | — | — | — | — | — | — | — | — | — | — |
| | | Particle diameter | µm | — | — | — | — | — | — | — | — | — | — | — | — | — | — |
| | | Content | %[3] | — | — | — | — | — | — | — | — | — | — | — | — | — | — |
| | Thickness | | µm | 0.30 | 0.30 | 0.30 | 0.30 | 0.30 | 0.30 | 0.30 | 0.30 | 0.30 | 0.05 | 0.30 | 0.30 | 0.50 | 0.50 |
| Stretching conditions | Stretched or unstretched before and after application of coating agent | Before application | | Unstretched | Unstretched | Unstretched | Unstretched | Unstretched | Unstretched | Unstretched | Unstretched | Unstretched | Unstretched | Unstretched | Unstretched | Unstretched | Unstretched |
| | | After application | | Stretched | Stretched | Stretched | Stretched | Stretched | Stretched | Stretched | Stretched | Stretched | Stretched | Stretched | Stretched | Stretched | Stretched |
| Laminated film characteristics | | Close adhesion | | 100 | 100 | 100 | 100 | 100 | 100 | 100 | 100 | 100 | 100 | 100 | 100 | 100 | 100 |
| | | Haze | % | 0.6 | 0.6 | 0.5 | 0.5 | 0.6 | 0.7 | 4.1 | 0.5 | 0.5 | 0.4 | 0.3 | 1.0 | 2.8 | 3.2 |
| | | Total light transmittance | % | 90.3 | 90.3 | 90.3 | 90.3 | 90.3 | 90.3 | 85.5 | 90.3 | 90.3 | 90.4 | 90.4 | 89.1 | 86.5 | 85.1 |
| | | Flex resistance | | Excellent | Excellent | Excellent | Excellent | Excellent | Excellent | Good | Good | Good | Excellent | Excellent | Excellent | Excellent | Excellent |
| | | Dynamic friction coefficient (II/II) | | 0.33 | 0.41 | 0.52 | 0.31 | 0.33 | 0.33 | 0.29 | 0.31 | 0.34 | 3.00 | 0.63 | 0.20 | 0.22 | 0.25 |
| | Thermal shrinkage factor | MD | % | 1.7 | 1.7 | 1.7 | 1.7 | 1.7 | 1.7 | 1.7 | 0.9 | 2.9 | 1.7 | 1.7 | 1.7 | 1.7 | 1.7 |
| | | TD | | 0.4 | 0.4 | 0.4 | 0.4 | 0.4 | 0.4 | 0.4 | 0.0 | 2.9 | 0.4 | 0.4 | 0.4 | 0.4 | 0.4 |
| | | Blocking resistance | | Fair | Fair | Fair | Fair | Fair | Fair | Excellent | Fair | Fair | Poor | Fair | Fair | Good | Good |
| Hard coat layer (HC) formed product | | Adhesiveness | | Excellent | Excellent | Excellent | Excellent | Excellent | Excellent | Excellent | Excellent | Excellent | Excellent | Excellent | Excellent | Excellent | Excellent |
| | | Haze | % | 0.2 | 0.2 | 0.2 | 0.2 | 0.3 | 0.3 | 3.5 | 0.2 | 0.2 | 0.2 | 0.2 | 0.5 | 2.6 | 3.0 |
| | | Total light transmittance | % | 90.7 | 90.7 | 90.7 | 90.7 | 90.7 | 90.7 | 87.5 | 90.7 | 90.7 | 90.7 | 90.5 | 90.5 | 87.2 | 86.1 |
| | | Dynamic friction coefficient (I/HC) | | 0.45 | 0.48 | 0.70 | 0.41 | 0.40 | 0.42 | 0.21 | 0.40 | 0.40 | 2.50 | 0.63 | 0.32 | 0.23 | 0.21 |
| | | Interference fringe | | Good | Good | Fair | Fair | Good | Good | Good | Good | Good | Good | Good | Good | Good | Good |
| | | Pencil hardness | | H | H | H | H | H | H | H | H | H | H | H | H | H | H |

[1] % by mass relative to the entire components constituting base film (

[2] Parts by mass relative to 100 parts by mass of the resin constituting

[3] % by mass relative to the entire components constituting resin layer

EP 3 928 980 A1

[Table 5]

| | | | | Example | | | | | | | | | | | | | | |
|---|---|---|---|---|---|---|---|---|---|---|---|---|---|---|---|---|---|---|
| | | | | 51 | 52 | 53 | 54 | 55 | 56 | 57 | 58 | 59 | 60 | 61 | 62 | 63 | 64 |
| | | Resin type | | A | A | A | A | A | A | A | A | A | A | A | A | A | A |
| Base film (I) | Silica | Particle diameter | µm | — | — | — | — | — | — | — | — | — | — | — | — | — | — |
| | | Content | %[1] | — | — | — | — | — | — | — | — | — | — | — | — | — | — |
| | Thickness | | µm | 25 | 25 | 25 | 25 | 25 | 25 | 25 | 25 | 25 | 25 | 25 | 25 | 25 | 25 |
| Resin layer (II) | Resin | Aqueous dispersion type | | A-1 | A-1 | A-1 | A-1 | A-1 | A-1 | A-1 | A-1 | A-1 | A-1 | A-1 | A-1 | A-1 | A-1 |
| | Crosslinking agent | Type | | — | — | — | — | — | — | — | — | — | — | — | — | — | — |
| | | Parts[2] | | — | — | — | — | — | — | — | — | — | — | — | — | — | — |
| | Fine particle 1 | Type | | F-7 | F-8 | F-9 | F-10 | F-6 | F-4 | F-11 | F-12 | F-3 | F-5 | F-5 | F-5 | F-5 | F-5 |
| | | Particle diameter | µm | 1.5 | 0.90 | 0.50 | 0.20 | 5.0 | 0.50 | 0.40 | 2.0 | 0.075 | 2.0 | 2.0 | 2.0 | 2.0 | 2.0 |
| | | Content | %[3] | 0.2 | 0.2 | 0.2 | 0.2 | 0.2 | 0.2 | 0.2 | 0.2 | 5.0 | 0.2 | 0.2 | 0.2 | 0.2 | 0.2 |
| | Fine particle 2 | Type | | — | — | — | — | — | — | — | — | — | — | F-3 | F-3 | F-3 | F-3 |
| | | Particle diameter | µm | — | — | — | — | — | — | — | — | — | — | 0.075 | 0.075 | 0.075 | 0.075 |
| | | Content | %[3] | — | — | — | — | — | — | — | — | — | — | 1 | 1 | 1 | 1 |
| | Thickness | | µm | 0.30 | 0.30 | 0.30 | 0.30 | 0.30 | 0.30 | 0.30 | 0.30 | 0.30 | 0.30 | 0.30 | 0.20 | 0.50 | 0.10 |
| Stretching conditions | Stretched or unstretched before and after application of coating agent | Before application | | Unstretched | Unstretched | Unstretched | Unstretched | Unstretched | Unstretched | Unstretched | Unstretched | Unstretched | Stretched | Unstretched | Unstretched | Unstretched | Unstretched |
| | | After application | | Stretched | Stretched | Stretched | Stretched | Stretched | Stretched | Stretched | Stretched | Stretched | Stretched | Stretched | Stretched | Stretched | Stretched |
| Laminated film characteristics | Close adhesion | | | 100 | 100 | 100 | 100 | 100 | 95 | 100 | 100 | 90 | 100 | 100 | 100 | 100 | 95 |
| | Haze | | % | 0.5 | 0.4 | 0.8 | 1.0 | 1.1 | 0.8 | 1.0 | 1.0 | 1.9 | 0.5 | 0.6 | 0.5 | 1.0 | 0.4 |
| | Total light transmittance | | % | 90.3 | 90.3 | 89.8 | 90.3 | 88.8 | 89.8 | 89.7 | 89.7 | 87.5 | 90.3 | 90.2 | 90.5 | 89.2 | 90.8 |
| | Flex resistance | | | Excellent | Excellent | Excellent | Excellent | Excellent | Excellent | Excellent | Excellent | Excellent | Excellent | Excellent | Excellent | Excellent | Excellent |
| | Dynamic friction coefficient (II/II) | | | 0.39 | 0.60 | 0.75 | 0.65 | 0.31 | 0.60 | 0.61 | 0.30 | 0.67 | 0.30 | 0.23 | 0.21 | 0.25 | 0.21 |
| | Thermal shrinkage factor | MD | % | 1.7 | 1.7 | 1.7 | 1.7 | 1.7 | 1.7 | 1.7 | 1.7 | 1.7 | 1.7 | 1.7 | 1.7 | 1.7 | 1.7 |
| | | TD | | 0.4 | 0.4 | 0.4 | 0.4 | 0.4 | 0.4 | 0.4 | 0.4 | 0.4 | 0.4 | 0.4 | 0.4 | 0.4 | 0.4 |
| | Blocking resistance | | | Fair | Good | Good | Good | Fair | Good | Good | Fair | Good | Fair | Excellent | Excellent | Excellent | Excellent |
| Hard coat layer (HC) formed product | Adhesiveness | | | Excellent | Excellent | Excellent | Excellent | Excellent | Excellent | Excellent | Excellent | Fair | Excellent | Excellent | Excellent | Excellent | Good |
| | Haze | | % | 0.2 | 0.2 | 0.2 | 0.2 | 0.3 | 0.5 | 0.2 | 0.2 | 1.7 | 0.2 | 0.3 | 0.2 | 0.5 | 0.2 |
| | Total light transmittance | | % | 90.7 | 90.7 | 90.7 | 90.7 | 90.5 | 90.5 | 90.7 | 90.7 | 88.3 | 90.7 | 91.0 | 91.1 | 90.0 | 91.1 |
| | Dynamic friction coefficient (I/HC) | | | 0.70 | 0.89 | 1.02 | 1.19 | 0.30 | 0.88 | 0.51 | 0.51 | 2.10 | 0.40 | 0.21 | 0.68 | 0.20 | 0.80 |
| | Interference fringe | | | Good | Good | Good | Good | Good | Fair | Fair | Fair | Fair | Good | Good | Good | Good | Good |
| | Pencil hardness | | | H | H | H | H | H | HB | H | H | H | H | H | H | H | H |

[1] % by mass relative to the entire components constituting base film (

[2] Parts by mass relative to 100 parts by mass of the resin constituting

[3] % by mass relative to the entire components constituting resin layer

EP 3 928 980 A1

41

[Table 6]

| | | | | Example | | | | | | | | | | | |
|---|---|---|---|---|---|---|---|---|---|---|---|---|---|---|---|
| | | | | 65 | 66 | 67 | 68 | 69 | 70 | 71 | 72 | 73 | 74 | 75 | 76 |
| Base film (I) | Resin type | Silica | Particle diameter (μm) | — | — | — | — | — | — | — | — | — | — | — | — |
| | | | Content (%)[1] | — | — | — | — | — | — | — | — | — | — | — | — |
| | Thickness (μm) | | | 25 | 25 | 25 | 25 | 25 | 25 | 25 | 25 | 25 | 25 | 25 | 25 |
| | Resin | Aqueous dispersion type | | A-1 | A-1 | A-1 | A-1 | A-1 | A-1 | A-1 | A-1 | A-1 | A-1 | A-1 | A-2 |
| Resin layer (II) | Crosslinking agent | Type | | — | — | — | — | — | — | — | — | — | C-1 | C-1 | — |
| | | Parts[2] | | — | — | — | — | — | — | — | — | — | 10 | 10 | — |
| | Fine particle 1 | Type | | F-5 | F-5 | F-5 | F-5 | F-5 | F-5 | F-5 | F-5 | F-5 | F-5 | F-5 | F-5 |
| | | Particle diameter (μm) | | 2.0 | 2.0 | 2.0 | 2.0 | 2.0 | 2.0 | 2.0 | 2.0 | 2.0 | 2.0 | 2.0 | 2.0 |
| | | Content (%)[3] | | 0.2 | 0.2 | 0.2 | 0.2 | 0.2 | 0.1 | 0.5 | 0.1 | 0.5 | 0.2 | 0.2 | 0.2 |
| | Fine particle 2 | Type | | F-3 | F-3 | F-3 | F-3 | F-3 | F-3 | F-3 | F-3 | F-3 | F-3 | F-3 | F-3 |
| | | Particle diameter (μm) | | 0.075 | 0.075 | 0.075 | 0.075 | 0.075 | 0.075 | 0.075 | 0.075 | 0.075 | 0.075 | 0.075 | 0.075 |
| | | Content (%)[3] | | 0.1 | 0.5 | 5 | 10 | 20 | 1 | 1 | 0.5 | 5 | 1 | 1 | 1 |
| | Thickness (μm) | | | 0.30 | 0.30 | 0.30 | 0.30 | 0.30 | 0.30 | 0.30 | 0.30 | 0.30 | 0.30 | 0.20 | 0.30 |
| Stretching conditions | Stretched or unstretched before and after application of coating agent | Before application | | Unstretched | Unstretched | Unstretched | Unstretched | Unstretched | Unstretched | Unstretched | Unstretched | Unstretched | Unstretched | Unstretched | Unstretched |
| | | After application | | Stretched | Stretched | Stretched | Stretched | Stretched | Stretched | Stretched | Stretched | Stretched | Stretched | Stretched | Stretched |
| Laminated film characteristics | Close adhesion | | | 100 | 100 | 100 | 100 | 98 | 100 | 100 | 100 | 100 | 100 | 100 | 100 |
| | Haze (%) | | | 0.4 | 0.5 | 3.5 | 4.2 | 5.5 | 0.5 | 0.8 | 0.4 | 3.5 | 0.6 | 0.5 | 0.6 |
| | Total light transmittance (%) | | | 90.8 | 90.5 | 89.8 | 89.5 | 89.0 | 90.3 | 90.0 | 90.6 | 89.5 | 90.2 | 90.5 | 90.2 |
| | Flex resistance | | | Excellent | Excellent | Excellent | Excellent | Excellent | Excellent | Excellent | Excellent | Excellent | Excellent | Excellent | Excellent |
| | Dynamic friction coefficient (I/II) | | | 0.43 | 0.32 | 0.31 | 0.30 | 0.28 | 0.50 | 0.20 | 0.51 | 0.20 | 0.21 | 0.31 | 0.23 |
| | Thermal shrinkage factor | MD (%) | | 1.7 | 1.7 | 1.7 | 1.7 | 1.7 | 1.7 | 1.7 | 1.7 | 1.7 | 1.7 | 1.7 | 1.7 |
| | | TD | | 0.4 | 0.4 | 0.4 | 0.4 | 0.4 | 0.4 | 0.4 | 0.4 | 0.4 | 0.4 | 0.4 | 0.4 |
| | Blocking resistance | | | Good | Good | Excellent | Excellent | Excellent | Excellent | Excellent | Good | Excellent | Excellent | Excellent | Excellent |
| | Adhesiveness | | | Excellent | Excellent | Excellent | Excellent | Good | Excellent | Excellent | Excellent | Excellent | Excellent | Excellent | Excellent |
| | Haze (%) | | | 0.3 | 0.3 | 1.7 | 2.3 | 3.0 | 0.3 | 0.3 | 0.2 | 1.7 | 0.3 | 0.3 | 0.3 |
| Hard coat layer (HC) formed product | Total light transmittance (%) | | | 91.0 | 91.0 | 88.0 | 87.6 | 87.0 | 91.0 | 91.0 | 91.1 | 88.0 | 91.0 | 91.0 | 91.0 |
| | Dynamic friction coefficient (II/HC) | | | 0.40 | 0.34 | 0.30 | 0.29 | 0.28 | 0.54 | 0.19 | 0.50 | 0.20 | 0.30 | 0.29 | 0.27 |
| | Interference fringe | | | Good | Good | Good | Good | Good | Good | Good | Good | Good | Good | Good | Good |
| | Pencil hardness | | | H | H | H | H | H | H | H | H | H | H | H | H |

[1] % by mass relative to the entire components constituting base film (I)
[2] Parts by mass relative to 100 parts by mass of the resin constituting
[3] % by mass relative to the entire components constituting resin layer

[0206] [Table 7]

| Category | | Property | Unit | Comparative Example | | | | | | | |
|---|---|---|---|---|---|---|---|---|---|---|---|
| | | | | 1 | 2 | 3 | 4 | 5 | 6 | 7 | 8 |
| Base film (I) | | Resin type | | A | A+M1 | A | A | D | E | F | A |
| | Silica | Particle diameter | μm | — | 1.7 | — | — | — | — | — | — |
| | Silica | Content | %[1] | — | 0.05 | — | — | — | — | — | — |
| | | Thickness | μm | 25 | 25 | 25 | 25 | 25 | 25 | 25 | 25 |
| Resin layer (II) | Resin | Aqueous dispersion type | | — | — | E-1 | E-1 | E-1 | S-1 | S-1 | E-1 |
| | Crosslinking agent | Type | | — | — | C-1 | C-1 | C-1 | C-1 | C-1 | C-1 |
| | | Parts[2] | | — | — | 10 | 10 | 10 | 10 | 10 | 10 |
| | Fine particle 1 | Type | | — | — | F-3 | F-3 | F-3 | F-3 | F-3 | F-3 |
| | | Particle diameter | μm | — | — | 0.075 | 0.075 | 0.075 | 0.075 | 0.075 | 0.075 |
| | | Content | %[3] | — | — | 16 | 16 | 16 | 16 | 16 | 16 |
| | Fine particle 2 | Type | | — | — | — | — | — | — | — | — |
| | | Particle diameter | μm | — | — | — | — | — | — | — | — |
| | | Content | %[3] | — | — | — | — | — | — | — | — |
| | | Thickness | μm | — | — | 0.025 | 0.60 | 0.30 | 0.30 | 0.30 | 0.30 |
| Stretching conditions | Stretched or unstretched before and after application of coating agent | Before application | | Stretched | Stretched | Unstretched | Unstretched | Unstretched | Stretched | Stretched | Unstretched |
| | | After application | | | | Stretched | Stretched | Stretched | Stretched | Stretched | Unstretched |
| Laminated film characteristics | | Close adhesion | | — | — | 100 | 90 | 100 | 100 | 100 | 90 |
| | | Haze | % | 0.2 | 4.0 | 1.1 | 1.4 | 1.2 | 1.0 | 10.0 | 1.0 |
| | | Total light transmittance | % | 91.3 | 86.0 | 90.1 | 89.5 | 90.5 | 90.2 | 86.5 | 90.8 |
| | | Flex resistance | | Excellent | Excellent | Excellent | Excellent | Excellent | Poor | Poor | Excellent |
| | | Dynamic friction coefficient (II/II) | | Unmeasurable | 0.4 | 0.50 | 0.72 | 0.64 | 0.56 | 0.48 | 0.64 |
| | Thermal shrinkage factor | MD | % | 1.7 | 1.7 | 1.6 | 1.5 | Unmeasurable | Unmeasurable | >3 | >3 |
| | | TD | % | 0.4 | 0.4 | 0.4 | 0.3 | Unmeasurable | Unmeasurable | >3 | >3 |
| | | Blocking resistance | | Poor | Good | Good | Poor | Good | Good | Good | Good |
| | | Adhesiveness | | Poor | Poor | Poor | Good | Excellent | Excellent | Excellent | Excellent |
| Hard coat layer (HC) formed product | | Haze | % | 0.3 | 3.8 | 0.5 | 1.2 | 0.4 | 0.2 | 8.3 | 0.4 |
| | | Total light transmittance | % | 91.2 | 91.0 | 91.0 | 90.0 | 91.0 | 91.1 | 89.0 | 91.0 |
| | | Dynamic friction coefficient (II/HC) | | Unmeasurable | 0.40 | 0.66 | 0.60 | 0.64 | 0.58 | 0.49 | 0.64 |
| | | Interference fringe | | Poor | Poor | Poor | Poor | Poor | Poor | Poor | Poor |
| | | Pencil hardness | | HB | HB | HB | HB | HB | H | H | HB |

[1] % by mass relative to the entire components constituting base film
[2] Parts by mass relative to 100 parts by mass of the resin constituting
[3] % by mass relative to the entire components constituting resin layer

As shown in the tables, the resin layers of the laminated films obtained in Examples were excellent in close adhesion to the semi-aromatic polyamide film, slipperiness, and adhesiveness to the hard coat layer, and the laminated films had excellent transparency, good blocking resistance, low thermal shrinkage factors, and excellent dimensional stability.

The films of Comparative Example 1 and Comparative Example 2 had inferior adhesiveness to the hard coat layer because they did not have a resin layer formed thereon. In particular, the film of Comparative Example 1 was also inferior in terms of slipperiness and blocking resistance.

In the laminated film of Comparative Example 3, the thickness of the resin layer was outside the lower limit value specified in the present invention, and the adhesiveness with the hard coat layer was inferior.

In the laminated film of Comparative Example 4, the thickness of the resin layer was outside the upper limit value specified in the present invention, and the close adhesion between the base film and the resin layer, as well as the blocking resistance, was inferior.

The laminated films of Comparative Examples 5 to 7 used resins other than those specified in the present invention for the base film for the present invention, and had inferior flex resistance, high thermal shrinkage factors, and inferior dimensional stability.

In the laminated film of Comparative Example 8, since the stretching specified in the present invention was not carried out, the close adhesion between the base film and the resin layer was inferior, the thermal shrinkage factor was high, and the dimensional stability was inferior.

**Claims**

1. A laminated film having a resin layer laminated on at least one surface of a base film, wherein:

   the base film is a semi-aromatic polyamide film that has been at least uniaxially stretched;
   the resin layer has a thickness of 0.03 to 0.5 $\mu$m; and
   a close adhesion between the base film and the resin layer, according to a cross-cut method described in JIS K 5600, is 95% or more.

2. The laminated film according to claim 1, wherein a resin constituting the resin layer contains one selected from the group consisting of a polyamide-based resin, a polyester-based resin, and a polyurethane-based resin.

3. The laminated film according to claim 2, wherein the polyamide-based resin is a dimer acid-based polyamide resin.

4. The laminated film according to claim 2, wherein the polyurethane-based resin is a polyester-based urethane resin.

5. The laminated film according to any one of claims 1 to 4, wherein the resin layer contains inorganic and/or organic fine particles.

6. The laminated film according to claim 5, wherein the resin layer has the fine particles at a content of 0.1 to 25% by mass.

7. The laminated film according to any one of claims 1 to 6, wherein the semi-aromatic polyamide contains an aromatic dicarboxylic acid component and an aliphatic diamine component.

8. The laminated film according to any one of claims 1 to 7, having a haze of 3% or less.

9. The laminated film according to any one of claims 1 to 8, having a dynamic friction coefficient of 0.7 or less under an atmosphere of 23°C $\times$ 50% RH on a surface of the resin layer.

10. The laminated film according to any one of claims 1 to 9, having a thermal shrinkage factor of 3% or less after a treatment at 250°C for 5 minutes.

11. A laminated body comprising an acrylic resin-containing layer laminated on the resin layer of the laminated film according to any one of claims 1 to 10.

12. An optical component using the laminated body according to claim 11.

13. A method for producing the laminated film according to claim 1, wherein a coating agent for resin layer formation is applied to at least one surface of a semi-aromatic polyamide film to form a resin layer.

14. The method for producing the laminated film according to claim 13, comprising the following steps (a) to (f):

    (a) producing an unstretched film made of semi-aromatic polyamide;
    (b) applying a coating agent for resin layer formation to at least one surface of the film made of semi-aromatic polyamide to form a coating film;
    (c) drying the coating film;
    (d) stretching the film;
    (e) subjecting the stretched film to a heat setting treatment at 250°C to (Tm - 5°C); and
    (f) rolling the stretched film up.

15. The method for producing the laminated film according to claim 14, wherein the steps are performed in an order of (a), (b), (c), (d), (e), and (f).

16. The method for producing the laminated film according to claim 14, wherein the steps are performed in an order of (a), (d), (b), (c), (d), (e), and (f).

17. The method for producing the laminated film according to claim 14, wherein the steps are performed in an order of (a), (d), (e), (b), (c), and (f).

## INTERNATIONAL SEARCH REPORT

| | International application No. |
|---|---|
| | PCT/JP2020/006485 |

### A. CLASSIFICATION OF SUBJECT MATTER

B32B 27/34(2006.01)i; B05D 7/04(2006.01)i; B05D 7/24(2006.01)i; B29C
55/02(2006.01)i; B29C 55/04(2006.01)i; B29C 55/12(2006.01)i; C08J
7/04(2020.01)i; G02B 1/11(2015.01)i; G02B 1/14(2015. 01)i
FI: B32B27/34; B05D7/04; B05D7/24 303A; B29C55/02; B29C55/04;
B29C55/12; C08J7/04 A CFG; G02B1/11; G02B1/14

According to International Patent Classification (IPC) or to both national classification and IPC

### B. FIELDS SEARCHED

Minimum documentation searched (classification system followed by classification symbols)
B32B1/00-43/00; B05D1/00-7/26; C08J7/04

Documentation searched other than minimum documentation to the extent that such documents are included in the fields searched
Published examined utility model applications of Japan      1922–1996
Published unexamined utility model applications of Japan    1971–2020
Registered utility model specifications of Japan            1996–2020
Published registered utility model applications of Japan    1994–2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2018/052104 A1 (UNITIKA LTD.) 22.03.2018 (2018-03-22) claims, paragraphs [0006], [0018]-[0019], [0034]-[0035], [0055]-[0059], [0065], [0107], examples 16, 17, tables 1, 2 | 1-3, 5-7, 10-17 |
| A | JP 2018-89962 A (TORAY INDUSTRIES, INC.) 14.06.2018 (2018-06-14) claims, paragraphs [0007], [0011], [0017]-[0018], [0032], [0037]-[0043] | 1-17 |
| A | JP 2018-154004 A (TORAY INDUSTRIES, INC.) 04.10.2018 (2018-10-04) claims, paragraphs [0010], [0022]-[0023], [0100]-[0106] | 1-17 |
| A | JP 49-10973 A (UNITIKA LTD.) 30.01.1974 (1974-01-30) claims, page 3, lower left column, lines 12-18, examples 1, 2 | 1-17 |

☒ Further documents are listed in the continuation of Box C.      ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April 2020 (20.04.2020) | 28 April 2020 (28.04.2020) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2020/006485

C (Continuation).    DOCUMENTS CONSIDERED TO BE RELEVANT

| Category* | Citation of document, with indication, where appropriate, of the relevant passages | Relevant to claim No. |
|---|---|---|
| P, A | JP 2019-51644 A (UNITIKA LTD.) 04.04.2019 (2019-04-04) claims, paragraphs [0006], [0021]-[0022], [0037], [0049], [0081], examples 1-15 | 1-17 |

Form PCT/ISA/210 (continuation of second sheet) (January 2015)

| INTERNATIONAL SEARCH REPORT | | International application No. | |
|---|---|---|---|
| Information on patent family members | | PCT/JP2020/006485 | |

| Patent Documents referred in the Report | Publication Date | Patent Family | Publication Date |
|---|---|---|---|
| WO 2018/052104 A1 | 22 Mar. 2018 | CN 109689827 A<br>KR 10-2019-0051988 A<br>TW 201813818 A | |
| JP 2018-89962 A | 14 Jun. 2018 | (Family: none) | |
| JP 2018-154004 A | 04 Oct. 2018 | (Family: none) | |
| JP 49-10973 A | 30 Jan. 1974 | (Family: none) | |
| JP 2019-51644 A | 04 Apr. 2019 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006190189 A

- JP 2015045718 A